# EUROPEAN PATENT SPECIFICATION

(11) **EP 3 537 734 B1**
(45) Date of publication and mention of the grant of the patent: **22.06.2022**
(21) Application number: 17867752.2
(22) Date of filing: 10.07.2017
(51) Int. Cl.: H04W 4/80, H04W 52/02

(54) **METHOD AND DEVICE FOR CONNECTING A BLUETOOTH DEVICE**
VERFAHREN UND EINRICHTUNG ZUR VERBINDUNG EINER BLUETOOTH-VORRICHTUNG
PROCÉDÉ ET DISPOSITIF DE CONNEXION DE DISPOSITIF BLUETOOTH

(30) Priority: 07.11.2016 CN 201610975510
(43) Date of publication of application: 11.09.2019
(73) Proprietor: ZTE Corporation, Shenzhen, Guangdong 518057 (CN)
(72) Inventor: DUAN, Shitao, Shenzhen Guangdong 518057 (CN)
(74) Representative: Aipex B.V.
(86) International application number: PCT/CN2017/092358
(87) International publication number: WO 2018/082335

(56) References cited:
- CN-A- 102 378 365
- CN-A- 105 406 923
- CN-A- 105 429 663
- CN-A- 106 030 455
- CN-A- 106 488 383
- US-A1- 2014 274 033
- US-A1- 2016 105 924

## Description

### TECHNICAL FIELD

The present disclosure relates to the Bluetooth communication technology in the field of wireless communications, for example, to a method, apparatus, system, and device for connecting to a Bluetooth device.

### BACKGROUND

In the related art, a Bluetooth device such as a Bluetooth headset or a vehicle-mounted Bluetooth device may be connected to a mobile terminal such as a mobile phone to implement the function of answering the phone call. If a Bluetooth headset or a vehicle-mounted Bluetooth device is in connection by using the Bluetooth headset profile (HSP) protocol or the hands free profile (HFP) protocol, the Bluetooth headset or the vehicle-mounted Bluetooth device can only be connected to one mobile phone at one moment. A new HFP protocol can support a headset or a vehicle-mounted Bluetooth device to be connected to two mobile phones at one moment. However, the Bluetooth headset or the vehicle-mounted Bluetooth device that supports the new HFP protocol can be used to answer an phone call only when one mobile phone receives the incoming call (not at the same time), and cannot be used to select and answer a call when two phones receive incoming calls at the same time. If two mobile phones receive incoming calls at the same time, the headset or the vehicle-mounted Bluetooth device can only be notified in the related art. A Bluetooth chip used in the mobile phone, the Bluetooth headset or the vehicle-mounted Bluetooth device that does not support the new HFP protocol cannot support multiple mobile phones to be connected to the Bluetooth headset or the vehicle-mounted Bluetooth device at the same time.

In the related art, when the user uses more than two mobile phones, the vehicle-mounted Bluetooth device cannot be ensured to keep connected to each mobile phone of the user, and even cannot be ensured to selectively answer an incoming call when the vehicle-mounted Bluetooth device is used by the user. Further relevant technologies are also known from US 2014/274033 A1 ( SMART ANDREW DOUGLAS [US] ET AL ) 18 September 2016 (2014-09-18) which relates to method and apparatus pertaining to use of Bluetooth and Bluetooth low energy, US 2016/105924 A1 ( BAEK IN HO [KR] ET AL ) 14 April 2016 (2016-04-14) which relates to multi-connection method and electronic device supporting the same.

### SUMMARY

The claimed scoped of protection is specified by the independent claims. Further embodiments are specified in the dependent claims.

Each terminal establishes and maintains the BLE connection with the Bluetooth device. When a terminal detects an incoming call, the terminal sends a notification message to the Bluetooth device. The Bluetooth device feeds back to the terminal a connection state report, such as whether the Bluetooth device is performing the calling function or in use, whether the Bluetooth device can be used in the current calling of the terminal or the like. The terminal determines to establish or disconnect a connection with the Bluetooth device according to the received connection state report. In such a way, the two terminals can be simultaneously connected to the Bluetooth device, and the answering of the incoming call of the terminal or the use of the function of the terminal is ensured.

With the enhancement of functions of the Bluetooth device, a selection function may be supported by the Bluetooth device. After the terminal detects the operation of triggering the state change of the terminal and sends the notification message to the Bluetooth device, the Bluetooth device may make a selection according to the detected connection state of the Bluetooth device with each terminal, to determine whether to access a new incoming call or whether to respond to a new usage requirement. After determination, the Bluetooth device sends a control command to a corresponding terminal. According to the control command, the terminal accesses the incoming call and performs the calling function or disconnects the call; or uses A2DP or disconnects the A2DP.

Two or more terminals can be connected with the Bluetooth device without increasing any device, and the terminal can be ensured to answer the incoming call or use the functions of the terminal, the cost is low, the implementation is simple, and the application range is wide.

Priorities may be set for the terminals according to important degrees or usage requirements. When a second terminal receives an incoming call or needs to be used while the first terminal is answering a call or in use, whether to perform the connection is determined according to the priority set for the terminal. Thus, the terminal and the Bluetooth device can be used more flexibly, and the personalized demand of the user can be met.

### BRIEF DESCRIPTION OF DRAWINGS

FIG. 1 is a flowchart of a method for connecting to a Bluetooth device performed at a terminal side according to an embodiment;
FIG. 2 is a structural diagram of an apparatus for connecting to a Bluetooth device according to an embodiment;
FIG. 3 is a flowchart of a method for connecting to a terminal according to an embodiment;
FIG. 4 is a structural diagram of an apparatus for connecting to a terminal according to an embodiment;
FIG. 5 is a schematic diagram illustrating a determining process of a terminal side according to an embodiment;
FIG. 6 is a schematic diagram illustrating a working process of a Bluetooth device side according to an embodiment;
FIG. 7 is a schematic diagram illustrating a determining process of a terminal side after receiving a connection state report according to an embodiment;
FIG. 8 is a schematic diagram illustrating a determining process of a terminal side when a first terminal receives an incoming call according to an embodiment 1;
FIG. 9 is a schematic diagram illustrating a working process of a Bluetooth device side when the first terminal receives the incoming call according to the embodiment 1;
FIG. 10 is a schematic diagram illustrating a determining process of the terminal side after receiving a connection state report when the first terminal receives the incoming call according to the embodiment 1;
FIG. 11 is a schematic diagram illustrating a determining process of a terminal side when a second terminal receives an incoming call while a first terminal is calling according to an embodiment 2;
FIG. 12 is a schematic diagram illustrating a working process of a Bluetooth device side when the second terminal receives the incoming call while the first terminal is calling according to the embodiment 2;
FIG. 13 is a schematic diagram illustrating a determining process of the terminal side after receiving a connection state report when the second terminal receives the incoming call while the first terminal is calling according to the embodiment 2;
FIG. 14 is a schematic diagram illustrating a determining process of a terminal side when a second terminal and a third terminal simultaneously receive incoming calls while a first terminal is calling according to an embodiment 3 in which the terminals are configured with priorities;
FIG. 15 is a schematic diagram illustrating a working process of a Bluetooth device side when the second terminal and the third terminal simultaneously receive the incoming calls while the first terminal is calling according to the embodiment 3 in which the terminals are configured with priorities;
FIG. 16 is a schematic diagram illustrating a determining process of the terminal side after receiving a connection state report when the second terminal and the third terminal simultaneously receive the incoming calls while the first terminal is calling according to the embodiment 3 in which the terminals are configured with priorities;
FIG. 17 is a schematic diagram illustrating a determining process of a terminal side when a second terminal and a third terminal simultaneously receive incoming calls while a first terminal is calling according to an embodiment 4;
FIG. 18 is a schematic diagram illustrating a working process of a Bluetooth device side when the second terminal and the third terminal simultaneously receive the incoming calls while the first terminal is calling according to the embodiment 4;
FIG. 19 is a schematic diagram illustrating a determining process of the terminal side after receiving a connection state report when the second terminal and the third terminal simultaneously receive the incoming calls while the first terminal is calling according to the embodiment 4;
FIG. 20 is a schematic diagram illustrating a determining process of a terminal side when a first terminal detects an audio playback operation according to an embodiment 5;
FIG. 21 is a schematic diagram illustrating a working process of a Bluetooth device side when the first terminal detects the audio playback operation according to the embodiment 5;
FIG. 22 is a schematic diagram illustrating a determining process of the terminal side after receiving a connection state report when the first terminal detects the audio playback operation according to the embodiment 5;
FIG. 23 is a diagram of a hardware configuration of a terminal according to an embodiment; and
FIG. 24 is a diagram of a hardware configuration of a Bluetooth device according to an embodiment.

### DETAILED DESCRIPTION

To provide a more detailed understanding of features and technical content of the following embodiments, implementation of the embodiments is described below in detail in conjunction with the drawings. The drawings are provided for reference only.

FIG. 1 is a flowchart of a method for connecting to a Bluetooth device implemented by a terminal side according to an embodiment. As shown in FIG. 1, the method for connecting to a Bluetooth device includes the steps described below.

In a step 101, two or more terminals establish and maintain a Bluetooth low energy (BLE) connection with a Bluetooth device.

The terminal includes a mobile phone, a tablet or a wearable smart device having at least one of a call function and an audio playback function. The Bluetooth device includes a vehicle-mounted Bluetooth device or a Bluetooth headset having at least one of a Bluetooth call function and an audio playback function. Establishing the BLE connection means that a connection between two or more terminals and a Bluetooth device is established through the BLE technology.

The terminal and the Bluetooth device may simultaneously support the BLE connection and at least one of the HSP connection and the HFP connection, or the terminal and the Bluetooth device may simultaneously support the BLE connection and the advanced audio distribution profile (A2DP) connection. The number of the two or more terminals may be less than or equal to six and greater than or equal to two. The HSP connection is connection in accordance with the HSP protocol, and the HFP connection is connection in accordance with the HFP protocol.

In a step 102, at least one terminal of the two or more terminals sends a notification message to the Bluetooth device upon detecting an operation triggering state change of the terminal.

The step of detecting the operation triggering the state change of the terminal may include: the terminal detecting an incoming call operation, the terminal detecting an outgoing call operation, the terminal detecting a hanging up call operation, the terminal detecting an audio playback operation; and the terminal detecting an operation of stopping audio playback.

The step of sending the notification message may include: sending a message for a communication connection, sending a message for ending a communication connection, sending a message for audio playback, and sending a message for stopping audio playback.

In a step 103, the terminal receives a connection state report sent by the Bluetooth device, and initiates, according to the received connection state report, with the BLE connection maintained, a connection request to the Bluetooth device to establish a Bluetooth communication connection. The connection request is used for indicating that the terminal requests to establish a non-BLE Bluetooth communication connection with the Bluetooth device.

The step of initiating, according to the received connection state report, with the BLE connection maintained, the connection request to the Bluetooth device may include one of the following.

At least one terminal of the two or more terminals initiates a request to establish an HFP connection with the Bluetooth device.

At least one terminal of the two or more terminals initiates a request to establish an HSP connection with the Bluetooth device.

At least one terminal of the two or more terminals initiates a request to disconnect the HFP connection with the Bluetooth device and only maintain the BLE connection.

At least one terminal of the two or more terminals initiates a request to disconnect the HSP connection with the Bluetooth device and only maintain the BLE connection.

At least one terminal of the two or more terminals initiates a request to establish an A2DP connection with the Bluetooth device.

At least one terminal of the two or more terminals initiates a request to disconnect the A2DP connection with the Bluetooth device and only maintain the BLE connection.

An apparatus for connecting to a Bluetooth device includes: a connection module, a detection module and a transceiving module.

The connection module is configured to establish and maintain a BLE connection between a terminal and a Bluetooth device; and initiate, according to a received connection state report, a connection request to the Bluetooth device. The connection request is used for indicating that the terminal requests to establish a non-BLE Bluetooth communication connection with the Bluetooth device.

The detection module is configured to detect an operation triggering a change in a state of the terminal.

The transceiving module is configured to send a notification message to the Bluetooth device upon detecting the operation triggering the change in the state of the terminal, and receive a connection state report sent by the Bluetooth device.

Alternatively, the detection module detecting the operation triggering the change in the state of the terminal includes one of: detecting an incoming call operation; detecting an outgoing call operation; and detecting a hanging up call operation.

Alternatively, the detection module detecting the operation triggering the change in the state of the terminal includes one of: detecting an audio playback operation; and detecting an operation of stopping audio playback.

Alternatively, the notification message sent to the Bluetooth device includes one of: a message for audio playback; and a message for stopping audio playback.

Alternatively, the connection state report includes one of: the Bluetooth device being in an HFP connection established state; the Bluetooth device being in an HSP connection established state; and the Bluetooth device being in an A2DP connection established state.

Alternatively, the transceiving module initiates, with the BLE connection maintained, any one of following connection requests to the Bluetooth device: a request initiated for establishing an HFP connection with the Bluetooth device; a request initiated for establishing an HSP connection with the Bluetooth device; a request initiated for disconnecting the HFP connection with the Bluetooth device and only maintaining the BLE connection; and a request initiated for disconnecting the HSP connection with the Bluetooth device and only maintaining the BLE connection.

Alternatively, the transceiving module initiates, with the BLE connection maintained, any one of following connection requests to the Bluetooth device: a request initiated for establishing an A2DP connection with the Bluetooth device; and a request initiated for disconnecting the A2DP connection with the Bluetooth device and only maintaining the BLE connection.

Alternatively, establishing the non-BLE Bluetooth communication connection includes one of: establishing an HSP connection with the Bluetooth device; establishing an HFP connection with the Bluetooth device; and establishing an A2DP connection with the Bluetooth device.

Alternatively, the terminal supports the BLE connection and supports at least one of an HSP connection, an HFP connection and an A2DP connection.

To implement the method shown in FIG. 1, an embodiment provides an apparatus for connecting to a Bluetooth device. As shown in FIG. 2, the apparatus for connecting to a Bluetooth device includes: a first connection module 201, a first detection module 202 and a first transceiving module 203.

The first connection module 201 is configured to establish and maintain a BLE connection between a terminal and a Bluetooth device.

The first detection module 202 is configured to detect an operation triggering state change of the terminal.

The first transceiving module 203 is configured to send a notification message to the Bluetooth device upon detecting the operation triggering the state change of the terminal; receive a connection state report from the Bluetooth device; and initiates, according to the received connection state report, with the BLE connection maintained, a connection request to the Bluetooth device to establish a Bluetooth communication connection. The connection request is used for indicating that the terminal requests to establish a non-BLE Bluetooth communication connection with the Bluetooth device.

The terminal supports the BLE connection and at least one of an HSP connection, an HFP connection, or an A2DP.

The first transceiving module 203 is configured to initiate, with the BLE connection maintained, any one of the following connection requests to the Bluetooth device:
a request initiated for establishing an HFP connection with the Bluetooth device;
a request initiated for establishing an HSP connection with the Bluetooth device;
a request initiated for disconnecting the HFP connection with the Bluetooth device and only maintaining the BLE connection;
a request initiated for disconnecting the HSP connection with the Bluetooth device and only maintaining the BLE connection;
a request initiated for establishing an A2DP connection with the Bluetooth device; and
a request initiated for disconnecting the A2DP connection with the Bluetooth device and only maintaining the BLE connection.

The first connection module 201, the first detection module 202 and the first transceiving module 203 may be implemented by a central processing unit (CPU), a micro processor unit (MPU), a digital signal processor (DSP) or a field programmable gate array (FPGA) located on the terminal.

FIG. 3 is a flowchart of a method for connecting to a Bluetooth device implemented by the Bluetooth device side according to an embodiment. The process of the method for connecting to a Bluetooth device implemented by the Bluetooth device side includes the steps described below.

In a step 301, a Bluetooth device establishes and maintains a BLE connection with two or more terminals.

In a step 302, the Bluetooth device receives a notification message, detects a connection state of the Bluetooth device, and sends a connection state report to at least one of the two or more terminals according to the detected connection state and the notification message.

The step of receiving the notification message may include one of:
receiving a message for a communication connection, receiving a message for ending a communication connection, receiving a message for audio playback, and receiving a message for stopping audio playback.

The state of the Bluetooth device may include one of the following: a state in which the HFP connection is not established; a state in which the HSP connection is not established; a state in which the HFP connection is established but the Bluetooth device is not performing a calling function; a state in which the HSP connection is established but the Bluetooth device is not performing the calling function; a state in which the HFP connection is established and the Bluetooth device is performing the calling function; a state in which the HSP connection is established and the Bluetooth device is performing the calling function;
a state in which the A2DP connection is not established; a state in which the A2DP connection is established and in use; and a state in which the A2DP connection is established but not in use.

The connection state report of the Bluetooth device may include one of: the Bluetooth device being in an HFP connection established state; the Bluetooth device being in an HSP connection established state; and the Bluetooth device being in an A2DP connection established state.

An apparatus for connecting to a terminal includes: a connection module, a detection module and a transceiving module.

The connection module is configured to establish and maintain a BLE connection between a Bluetooth device and two or more terminals.

The detection module is configured to detect a connection state report of the Bluetooth device.

The transceiving module is configured to receive a notification message, and sends the connection state report to at least one terminal of the two or more terminals according to the detected connection state and the notification message.

Alternatively, the detection module detects that the Bluetooth device is in any one of following connection states: the Bluetooth device is not in an HFP connection; the Bluetooth device is not in an HFP connection; the Bluetooth device is in the HFP connection but the Bluetooth device is not performing a calling function; the Bluetooth device is in the HSP connection but the Bluetooth device is not performing the calling function; the Bluetooth device is in the HFP connection and the Bluetooth device is performing the calling function; and the Bluetooth device is in the HSP connection and the Bluetooth device is performing the calling function.

Alternatively, the detection module detects that the Bluetooth device is in any one of following connection states: the Bluetooth device is not in an A2DP connection; the Bluetooth device is in the A2DP connection and the A2DP connection is in use; and the Bluetooth device is in the A2DP connection but the A2DP connection is not in use.

Alternatively, the connection state report includes one of: the Bluetooth device being in an HFP connection established state; the Bluetooth device being in an HSP connection established state; and the Bluetooth device being in an A2DP connection established state.

Alternatively, the connection module is further configured to perform one of following operations: establishing and maintaining an HSP connection between the Bluetooth device and at least one terminal of the two or more terminals;
establishing and maintaining an HFP connection between the Bluetooth device and the at least one terminal of the two or more terminals; and establishing and maintaining an A2DP connection between the Bluetooth device and the at least one terminal of the two or more terminals.

Alternatively, the transceiving module is further configured to receive, with the BLE connection maintained, a connection request initiated by the terminal; and establish a non-BLE Bluetooth communication connection with the at least one terminal of the two or more terminals in response to the connection request. The connection request is used for indicating that the terminal requests to establish the non-BLE Bluetooth communication connection with the Bluetooth device.

Alternatively, with the BLE connection maintained, the received connection request initiated by the terminal includes one of: a request initiated by the terminal for establishing an HFP connection with the Bluetooth device; a request initiated by the terminal for establishing an HSP connection with the Bluetooth device; a request initiated by the terminal for disconnecting the HFP connection with the Bluetooth device and only maintaining the BLE connection; and a request initiated by the terminal for disconnecting the HSP connection with the Bluetooth device and only maintaining the BLE connection.

Alternatively, with the BLE connection maintained, the received connection request initiated by the terminal includes one of: a request initiated by the terminal for establishing an A2DP connection with the Bluetooth device; and a request initiated by the terminal for disconnecting the A2DP connection with the Bluetooth device and only maintaining the BLE connection.

Alternatively, the terminal requesting to establish the non-BLE Bluetooth communication connection with the Bluetooth device includes one of: the terminal requesting to establish an HSP connection with the Bluetooth device; the terminal requesting to establish an HFP connection with the Bluetooth device; and the terminal requesting to establish an A2DP connection with the Bluetooth device.

Alternatively, the apparatus further includes: a switching module which is configured to perform one of following operations: with the BLE connection maintained, switching the Bluetooth device from a state in which the Bluetooth device is in the HFP connection and performs the calling function to a state in which the Bluetooth device is not in the HFP connection; with the BLE connection maintained, switching the Bluetooth device from a state in which the Bluetooth device is in the HSP connection and performs the calling function to a state in which the Bluetooth device is not in the HSP connection; with the BLE connection maintained, switching the Bluetooth device from the state in which the Bluetooth device is in the HFP connection and performs the calling function to a state in which the Bluetooth device is in the HFP connection but is not performing the calling function; with the BLE connection maintained, switching the Bluetooth device from the state in which the Bluetooth device is in the HSP connection and performs the calling function to a state in which the Bluetooth device is in the HSP connection but is not performing the calling function; with the BLE connection maintained, switching the Bluetooth device from a state in which the Bluetooth device is in an A2DP connection and the A2DP connection is in use to a state in which the Bluetooth device is not in the A2DP connection; and with the BLE connection maintained, switching the Bluetooth device from the state in which the Bluetooth device is in the A2DP connection and the A2DP connection is in use to a state in which the Bluetooth device is in the A2DP connection but the A2DP connection is not in use.

To implement the method shown in FIG. 3, an embodiment provides an apparatus for connecting to a terminal. As shown in FIG. 4, the apparatus for connecting to a terminal includes: a second connection module 401, a second detection module 402 and a second transceiving module 403.

The second connection module 401 is configured to establish and maintain a BLE connection between a Bluetooth device and two or more terminals.

The second detection module 402 is configured to detect a connection state report of the Bluetooth device.

The second transceiving module 403 is configured to receive a notification message, and sends a connection state report to at least one of the two or more terminals according to the detected connection state and the notification message.

The Bluetooth device supports the BLE connection and at least one of an HSP connection, an HFP connection and an A2DP connection.

The second detection module 402 may be configured to detect that the Bluetooth device is in any one of the following connection states:
a state in which the HFP connection is not established; a state in which the HSP connection is not established; a state in which the HFP connection is established but the Bluetooth device is not performing a calling function; a state in which the HSP connection is established but the Bluetooth device is not performing the calling function; a state in which the HFP connection is established and the Bluetooth device is performing the calling function; and a state in which the HSP connection is established and the Bluetooth device is performing the calling function;
a state in which the A2DP connection is not established; a state in which the A2DP connection is established and in use; and a state in which the A2DP connection is established but not in use.

The second transceiving module 403 may be configured to send a connection state report to the terminal according to the detected connection state and the notification message.

The Bluetooth device may further be configured to perform one of the following operations:
establishing and maintaining an HSP connection between the Bluetooth device and at least one of the two or more terminals;
establishing and maintaining an HFP connection between the Bluetooth device and the at least one of the two or more terminals; and
establishing and maintaining an A2DP connection between the Bluetooth device and the at least one of the two or more terminals.

The Bluetooth device may further be configured to perform one of the following operations.

With the BLE connection maintained, the Bluetooth device is switched from a state in which the Bluetooth device is in the HFP connection and performs the calling function to a state in which the Bluetooth device is not in the HFP connection.

With the BLE connection maintained, the Bluetooth device is switched from a state in which the Bluetooth device is in the HSP connection and performs the calling function to a state in which the Bluetooth device is not in the HSP connection.

With the BLE connection maintained, the Bluetooth device is switched from the state in which the Bluetooth device is in the HFP connection and performs the calling function to a state in which the Bluetooth device is in the HFP connection but is not performing the calling function.

With the BLE connection maintained, the Bluetooth device is switched from the state in which the Bluetooth device is in the HSP connection and performs the calling function to a state in which the Bluetooth device is in the HSP connection but is not performing the calling function.

With the BLE connection maintained, the Bluetooth device is switched from a state in which the Bluetooth device is in an A2DP connection and the A2DP connection is in use to a state in which the Bluetooth device is not in the A2DP connection.

With the BLE connection maintained, the Bluetooth device is switched from the state in which the Bluetooth device is in the A2DP connection and the A2DP connection is in use to a state in which the Bluetooth device is in the A2DP connection but the A2DP connection is not in use.

The second connection module 401, the second detection module 402 and the second transceiving module 403 may be implemented by a CPU, an MPU, a DSP or an FPGA located on the Bluetooth device.

A system for connecting to a Bluetooth device includes the Bluetooth device and two or more terminals.

Each of the two or more terminals is configured to establish and maintain a BLE connection with the Bluetooth device; send a notification message to the Bluetooth device upon detecting an operation triggering a change in its state; receive a connection state report from the Bluetooth device, and initiate, according to the received connection state report, with the BLE connection maintained, a connection request to the Bluetooth device to establish a Bluetooth communication connection. The connection request is used for indicating that the terminal requests to establish a Bluetooth communication connection with the Bluetooth device.

The Bluetooth device is configured to establish and maintain the BLE connection with the two or more terminals; receive the notification message; detect a connection state of the Bluetooth device; and send the connection state report to the terminal according to the detected connection state and the notification message.

Alternatively, detecting the operation triggering the change in the state of the terminal includes one of: detecting an incoming call operation; detecting an outgoing call operation; and detecting a hanging up call operation.

Alternatively, detecting the operation triggering the change in the state of the terminal includes one of: detecting an audio playback operation; and detecting an operation of stopping audio playback.

Alternatively, the detected connection state of the Bluetooth device includes one of the following: an HFP connection is not established; a hands free profile, HFP, connection is not established; the HFP connection is established but the Bluetooth device is not performing a calling function; the HSP connection is established but the Bluetooth device is not performing the calling function; the HFP connection is established and the Bluetooth device is performing the calling function; and the HSP connection is established and the Bluetooth device is performing the calling function.

Alternatively, the detected connection state of the Bluetooth device includes one of the following: an A2DP connection is not established; the A2DP connection is established and in use; and the A2DP connection is established but not in use.

Alternatively, the connection state report of the Bluetooth device includes one of: the Bluetooth device being in an HFP connection established state; the Bluetooth device being in an HSP connection established state; and the Bluetooth device being in an A2DP connection established state.

Alternatively, with the BLE connection maintained, the connection request initiated to the Bluetooth device includes any one of following connection requests: a request initiated for establishing an HFP connection with the Bluetooth device; a request initiated for establishing an HSP connection with the Bluetooth device; a request initiated for disconnecting the HFP connection with the Bluetooth device and only maintaining the BLE connection; and a request initiated for disconnecting the HSP connection with the Bluetooth device and only maintaining the BLE connection.

Alternatively, with the BLE connection maintained, the connection request initiated to the Bluetooth device includes any one of following connection requests: a request initiated for establishing an A2DP connection with the Bluetooth device; and a request initiated for disconnecting the A2DP connection with the Bluetooth device and only maintaining the BLE connection.

Alternatively, establishing the Bluetooth communication connection includes one of: establishing an HSP connection with the Bluetooth device; establishing an HFP connection with the Bluetooth device; and establishing an A2DP connection with the Bluetooth device.

Alternatively, the detected connection state includes one of the following: an HFP connection is not established; an HSP connection is not established; the HFP connection is established but the Bluetooth device is not performing a calling function; the HSP connection is established but the Bluetooth device is not performing the calling function; the HFP connection is established and the Bluetooth device is performing the calling function; and the HSP connection is established and the Bluetooth device is performing the calling function.

Alternatively, the detected connection state includes one of the following: an A2DP connection is not established; the A2DP connection is established and in use; and the A2DP connection is established but not in use.

Alternatively, the Bluetooth device is further configured to perform one of following operations: establishing and maintaining an HSP connection between the Bluetooth device and at least one terminal of the two or more terminals; establishing and maintaining an HFP connection between the Bluetooth device and the at least one terminal of the two or more terminals; and establishing and maintaining an A2DP connection between the Bluetooth device and the at least one terminal of the two or more terminals.

Alternatively, the Bluetooth device is further configured to perform one of following operations: with the BLE connection maintained, switching the Bluetooth device from a state in which the Bluetooth device is in the HFP connection and performs the calling function to a state in which the Bluetooth device is not in the HFP connection; with the BLE connection maintained, switching the Bluetooth device from a state in which the Bluetooth device is in the HSP connection and performs the calling function to a state in which the Bluetooth device is not in the HSP connection; with the BLE connection maintained, switching the Bluetooth device from the state in which the Bluetooth device is in the HFP connection and performs the calling function to a state in which the Bluetooth device is in the HFP connection but is not performing the calling function; with the BLE connection maintained, switching the Bluetooth device from the state in which the Bluetooth device is in the HSP connection and performs the calling function to a state in which the Bluetooth device is in the HSP connection but is not performing the calling function; with the BLE connection maintained, switching the Bluetooth device from a state in which the Bluetooth device is in an A2DP connection and the A2DP connection is in use to a state in which the Bluetooth device is not in the A2DP connection; and with the BLE connection maintained, switching the Bluetooth device from the state in which the Bluetooth device is in the A2DP connection and the A2DP connection is in use to a state in which the Bluetooth device is in the A2DP connection but the A2DP connection is not in use.

A terminal includes: a processor which is configured to establish and maintain a BLE connection between a terminal and a Bluetooth device; detect an operation triggering state change of the terminal; send a notification message to the Bluetooth device upon detecting the operation triggering the state change of the terminal; and receive a connection state report of the Bluetooth device, and initiate, according to the received connection state report, with the BLE connection maintained, a connection request to the Bluetooth device to establish a Bluetooth communication connection. The connection request is used for indicating that the terminal requests to establish a non-BLE Bluetooth communication connection with the Bluetooth device.

FIG. 5 is a schematic diagram illustrating a determining process of a terminal side according to an embodiment. As shown in FIG. 5, the determining process of the terminal side in the embodiment includes the steps described below.

In a step 501, a terminal detects an operation triggering state change of the terminal.

The step of detecting the operation triggering the state change of the terminal may include: the terminal detecting an operation of an incoming call, the terminal detecting an operation of an outgoing call, the terminal detecting an operation of a hanging up call, the terminal detecting an operation of an audio playback; and the terminal detecting an operation of stopping audio playback.

In a step 502, it is checked whether the terminal is connected to the Bluetooth device. If the terminal is connected to the Bluetooth device, a step 504 is performed. If the terminal is not connected to the Bluetooth device, a step 503 is performed.

The connection may include: a BLE connection, an HSP connection, an HFP connection, or an A2DP connection.

In a step 503, the operation is completed through the terminal and the current processing flow ends.

The operation implemented through the terminal may include: answering a call, dialing a call, hanging up a call, playing back audio or stopping audio playback through the terminal.

In a step 504, it is checked whether an HFP connection, an HFP or an A2DP connection is established between the terminal and the Bluetooth device. If the HFP connection, the HFP or the A2DP connection is established between the terminal and the Bluetooth device, a step 505 is performed. If none of the HFP connection, the HFP or the A2DP connection is established between the terminal and the Bluetooth device, a step 506 is performed.

The type of connection between the terminal and the Bluetooth device may also be an HSP connection supported by the terminal. It may be checked whether the HSP connection is established between the terminal and the Bluetooth device.

In a step 505, the Bluetooth device performs the operation detected by the terminal (for example, when the terminal detects the operation of answering the call, the Bluetooth device is used in answering the call), and the current processing flow ends.

In a step 506, it is checked whether the BLE connection is established between the terminal and the Bluetooth device. If the terminal and the Bluetooth device are in the BLE connection, a step 507 is performed. If the terminal and the Bluetooth device are not in the BLE connection, the step 503 is performed.

In a step 507, it is checked whether the Bluetooth device which is in the BLE connection with the terminal supports the HSP connection (or HFP connection). If the Bluetooth device which is in the BLE connection with the terminal supports the HSP connection (or HFP connection), a step 509 is performed. If the Bluetooth device which is in the BLE connection with the terminal does not support the HSP connection (or HFP connection), a step 508 is performed.

In a step 508, connection error information is displayed, and the current processing flow ends.

In a step 509, the terminal updates the record on the terminal side and sends a notification message to the Bluetooth device.

In the embodiment, update of the record on the terminal side may be: recording, in the application layer profile of the terminal side, an event corresponding to the terminal-detected operation of triggering the state change of the terminal, and changing the characteristic of the Bluetooth Gatt Service in the Bluetooth Ble protocol of the application layer profile on the terminal side.

The configuration file may be based on a server attribute and a client attribute (Generic Attribute Profile (GATT)), and the configuration file may ensure that the terminal and the Bluetooth device perform communication when the terminal and the Bluetooth device are in the BLE connection. The terminal side acts as a server, and the Bluetooth device side acts as a client. The server of the profile includes a Bluetooth Gatt Service, and the Bluetooth Gatt Service may include two Bluetooth Gatt Characteristics. One of the two Bluetooth Gatt Characteristics may be used for saving the HFP connection state, the HSP connection state, or the A2DP connection state in the Bluetooth device currently in the BLE connection state.

FIG. 6 is a schematic diagram illustrating a working process of a Bluetooth device side according to an embodiment. As shown in FIG. 6, the determining process of the Bluetooth device side in the embodiment includes the steps described below.

In a step 601, a Bluetooth device receives a notification message.

In a step 602, it is checked whether an HSP connection, an HFP connection or an A2DP connection is established between the Bluetooth device and a terminal. If the above detected type of connection is established between the Bluetooth device and the terminal, a step 604 is performed. If none of the above connection is established between the Bluetooth device and the terminal, a step 603 is performed.

The Bluetooth device may obtain the connection type (for example, HSP connection, HFP connection, or A2DP connection) supported by the terminal according to the request sent by the terminal. If the request is related to the call, it may be checked whether the HFP connection or the HSP connection is established between the Bluetooth device and the terminal in the step 602. If the request is related to music playing, it may be checked whether the A2DP connection is established between the Bluetooth device and the terminal in the step 602.

In the step 603, a connection state report is sent for indicating that none of the checked connection type is established (for example, the HSP connection is not established, the HFP connection is not established, or the A2DP connection is not established) between the Bluetooth device and the terminal, and the current processing flow ends.

In a step 604, it is determined whether the Bluetooth device is calling or performing the playback function. If the Bluetooth device is calling or performing the playback function, a step 606 is performed. If the Bluetooth device is performing neither the calling function nor the playback function, a step 605 is performed.

In the step 605, the current connection is disconnected and a connection state report is sent for indicating that none of the checked connection types is established (for example, the HSP connection is not established, the HFP connection is not established, or the A2DP connection is not established) for the Bluetooth device, and the current processing flow ends.

In the step 606, a Bluetooth device interface is used for notifying the user.

In a step 607, a command is received to determine whether to change a current state of the Bluetooth device. If the current state of the Bluetooth device is changed, a step 609 is performed. If the current state of the Bluetooth device is not changed, a step 608 is performed.

In the step 608, the current state of the Bluetooth device is maintained and a connection state report is sent for indicating that the Bluetooth device is in the connection state of the detected connection type (for example, the Bluetooth device is in the HSP connection state and is performing the calling function, the Bluetooth device is in the HFP connection state and is performing the calling function, the Bluetooth device is in the HSP connection state but the Bluetooth device is not performing the calling function, the Bluetooth device is in the HFP connection state but the Bluetooth device is not performing the calling function, the Bluetooth device is in the state where the A2DP connection is established and in use, or the Bluetooth device is in the state where the A2DP connection is established but not in use), and the current processing flow ends.

The A2DP connection being established and in use may be that the Bluetooth device and the terminal are transmitting audio data (e.g., playing music) through the A2DP. The A2DP connection being established but not in use may be that the A2DP connection is established between the Bluetooth device and the terminal with no audio data transmitted (e.g., no music played).

In the step 609, the current connection is disconnected and the connection state report is sent for indicating that none of the checked connection type is established (for example, the HSP connection is not established, the HFP connection is not established, or the A2DP connection is not established) for the Bluetooth device.

The received instruction may be a preset priority of each terminal. If two terminals simultaneously send a connection request, the terminal having a higher priority may be selected to be connected to the Bluetooth device, or a user may manually select whether to change the current state of the Bluetooth device.

FIG. 7 is a schematic diagram illustrating a determining process of a terminal side after receiving a connection state report according to an embodiment. As shown in FIG. 7, the determining process performed by the terminal side after receiving the connection state report in the embodiment includes the steps described below.

In a step 701, a terminal receives a connection state report sent by a Bluetooth device.

In a step 702, the terminal determines a connection state of the Bluetooth device according to the connection state report. If the connection state report indicates that none of the detected connection type is established (for example, the HSP connection is established, the HFP connection is established, or the A2DP connection is established) for the Bluetooth device, a step 704 is performed. If the connection state report indicates that none of the detected connection type is established (for example, the HSP connection is not established, the HFP connection is not established, or the A2DP connection is not established) for the Bluetooth device, a step 703 is performed.

In the step 703, the current processing flow is exited and ends.

In the step 704, a terminal interface is used, and an HSP connection request, an HFP connection request or an A2DP connection request is initiated to the Bluetooth device.

In a step 705, it is determined whether a connection is established between the terminal and the Bluetooth device. If the connection is established between the terminal and the Bluetooth device, a step 706 is performed. If the connection fails to be established between the terminal and the Bluetooth device, the step 702 is performed.

In the step 706, the Bluetooth device is used to answer a call, hang up a call, dial a call, play audio, or end audio.

FIG. 8 is a schematic diagram illustrating a determining process of a terminal side when a first terminal receives an incoming call according to an embodiment 1. As shown in FIG. 8, the determining process of the terminal side when the first terminal receives the incoming call in the embodiment 1 includes the steps described below.

In a step 801, a first terminal detects an incoming call operation.

In the embodiment, the method in the embodiment is described with an example in which the first terminal supports the HSP connection. The HSP connection in the embodiment may also be replaced with the HFP connection.

In a step 802, it is checked whether the first terminal is connected to a Bluetooth device. If the first terminal is connected to the Bluetooth device, a step 804 is performed. If the first terminal is not connected to the Bluetooth device, a step 803 is performed.

The connection between the terminal and the Bluetooth device may include: a BLE connection, the HSP connection or the HFP connection.

In the step 803, the incoming call is answered with the first terminal, and the processing flow ends.

In the step 804, it is checked whether the first terminal is in the HSP connection. If the first terminal is in the HSP connection, a step 805 is performed. If the first terminal is not in the HSP connection, a step 806 is performed.

In the step 805, the terminal is switched to be in the HSP connection, and the processing flow ends.

In the step 806, it is checked whether the first terminal and the Bluetooth device are in the BLE connection. If the first terminal and the Bluetooth device are in the BLE connection, a step 807 is performed. If the first terminal and the Bluetooth device are not in the BLE connection, the step 803 is performed.

In a step 807, it is checked whether the Bluetooth device which is in the BLE connection with the first terminal supports the HSP connection. If the Bluetooth device which is in the BLE connection with the first terminal supports the HSP connection, a step 809 is performed. If the Bluetooth device which is in the BLE connection with the first terminal does not support the HSP connection, a step 808 is performed.

In the step 808, connection error information is displayed, and the current processing flow ends.

In the step 809, a record on the terminal side is updated and a notification message is sent.

Before the step 801 is performed, the method may further include pairing all the terminals of the user with the Bluetooth device, establishing a BLE connection, and maintaining the BLE connection.

FIG. 9 is a schematic diagram illustrating a working process of a Bluetooth device side when the first terminal receives the incoming call according to the embodiment 1. As shown in FIG. 9, the working process of the Bluetooth device side when the first terminal receives the incoming call in the embodiment 1 includes the steps described below. In conjunction with the embodiment illustrated in FIG. 8, the terminal supporting the HSP connection is taken as an example. If the terminal supports the HFP connection in the embodiment illustrated in FIG. 8, the HSP connection in the embodiment illustrated in FIG. 9 may also be replaced with the HFP connection.

In a step 901, a Bluetooth device receives a notification message.

The Bluetooth device may learn about the connection type supported by the terminal from the received notification message. In conjunction with the embodiment illustrated in FIG. 8, the terminal in FIG. 8 supports the HSP connection, and then the Bluetooth device may learn from the notification message that the terminal supports the HSP connection.

In a step 902, it is checked whether the Bluetooth device in in the HSP connection. If the Bluetooth device is in the HSP connection, a step 904 is performed. If the Bluetooth device is not in the HSP connection, a step 903 is performed.

In the step 901, the Bluetooth device may learn about the connection type supported by the terminal, and in the step 902, the Bluetooth device may check whether the Bluetooth device is in the connection type supported by the terminal.

In the step 903, a connection state report is sent for indicating that the Bluetooth device is not in the HSP connection, and the processing flow ends.

In the step 904, it is determined whether the Bluetooth device is performing a calling function. If the Bluetooth device is performing the calling function, a step 906 is performed. If the Bluetooth device is not performing the calling function, a step 905 is performed.

In the step 905, the connection between the Bluetooth device and the first terminal is disconnected, a connection state report is sent for indicating that the Bluetooth device is not in the HSP connection, and the processing flow ends.

In the step 906, a Bluetooth device interface is used for notifying the user.

In a step 907, a command is received to determine whether to change the state of the Bluetooth device. If it is determined to change the state of the Bluetooth device, a step 909 is performed. If it is determined not to change the state of the Bluetooth device, a step 908 is performed.

In the step 908, the current connection state of the Bluetooth device is maintained, a connection state report is sent for indicating that the Bluetooth device is in the HSP connection and is performing the calling function or indicating that the Bluetooth device is in the HSP connection but the Bluetooth device is not performing the calling function, and the processing flow ends.

In the step 909, the connection between the Bluetooth device and the first terminal is disconnected, and a connection state report is sent for indicating that the Bluetooth device is not in the HSP connection.

FIG. 10 is a schematic diagram illustrating a determining process of the terminal side after receiving a connection state report when the first terminal receives the incoming call according to the embodiment 1. As shown in FIG. 10 and in conjunction with the embodiment illustrated in FIG. 9, the determining process of the terminal side after receiving the connection state report when the first terminal receives the incoming call in the embodiment 1 includes the steps described below.

In a step 1001, a first terminal receives a connection state report sent by a Bluetooth device.

In a step 1002, the first terminal determines a connection state of the Bluetooth device in the connection state report. If the connection state report indicates that the Bluetooth device is in an HSP connection, a step 1003 is performed. If the connection state report indicates that the Bluetooth device is not in the HSP connection, a step 1004 is performed.

In the step 1003, the processing flow is exited and ends.

In the step 1004, the first terminal initiates the HSP connection to the Bluetooth device by using an interface of the first terminal.

In a step 1005, it is determined whether the HSP connection is established between the first terminal and the Bluetooth device. If the HSP connection is established between the first terminal and the Bluetooth device, a step 1006 is performed. If the HSP connection is not established between the first terminal and the Bluetooth device, the step 1002 is performed.

In the step 1006, the call is answered by using the Bluetooth device.

FIG. 11 is a schematic diagram illustrating a determining process of a terminal side when a second terminal receives an incoming call while a first terminal is performing a calling function according to an embodiment 2. As shown in FIG. 11, the determining process of the terminal side when the second terminal receives the incoming call while the first terminal is performing the calling function in the embodiment 2 includes the steps described below.

In a step 1101, a second terminal detects an incoming call operation.

In a step 1102, it is checked whether the second terminal is connected to a Bluetooth device. If the second terminal is connected to the Bluetooth device, a step 1104 is performed. If the second terminal is not connected to the Bluetooth device, a step 1103 is performed.

The connection between the terminal and the Bluetooth device may include: a BLE connection, an HSP connection or an HFP connection.

In a step 1103, the incoming call is answered by using the second terminal, and the processing flow ends.

In a step 1104, it is checked whether the second terminal and the Bluetooth device are in the HSP connection. If the second terminal and the Bluetooth device are in the HSP connection, a step 1105 is performed. If the second terminal is not in the HSP connection, a step 1106 is performed.

In the step 1105, the Bluetooth device performs an operation detected by the terminal, and the processing flow ends.

In the step 1106, it is checked whether the second terminal and the Bluetooth device are in the BLE connection. If the second terminal and the Bluetooth device are in the BLE connection, a step 1107 is performed. If the second terminal is not in the BLE connection, the step 1103 is performed.

In the step 1107, it is checked whether the Bluetooth device which is in the BLE connection with the second terminal supports the HSP connection. If the Bluetooth device which is in the BLE connection with the second terminal supports the HSP connection, a step 1109 is performed. If the Bluetooth device which is in the BLE connection with the second terminal does not support the HSP connection, a step 1108 is performed.

In the step 1108, connection error information is displayed, and the present processing flow ends.

In a step 1109, a record on the second terminal side is updated and the second terminal sends a notification message to the Bluetooth device.

Before the step 1101 is performed, the method may further include: pairing all the terminals of the user with the Bluetooth device, establishing a BLE connection, and maintaining the BLE connection. The second terminal receives an incoming call while the first terminal is performing the calling function through the HSP connection with the Bluetooth device.

FIG. 12 is a schematic diagram illustrating a working process of a Bluetooth device side when the second terminal receives the incoming call while the first terminal is calling according to the embodiment 2. As shown in FIG. 12, the working process of the Bluetooth device side when the second terminal receives the incoming call while the first terminal is calling in the embodiment 2 includes the steps described below.

In a step 1201, a Bluetooth device receives notification.

In a step 1202, it is checked whether the Bluetooth device is in an HSP connection. If the Bluetooth device is in the HSP connection, a step 1204 is performed. If the Bluetooth device is not in the HSP connection, a step 1203 is performed.

In the step 1203, a connection state report is sent to the second terminal for indicating that the Bluetooth device is not in the HSP connection, and the present processing flow ends.

In the step 1204, it is determined whether the Bluetooth device is performing a calling function. If the Bluetooth device is performing the calling function, a step 1206 is performed. If the Bluetooth device is not performing the calling function, a step 1205 is performed.

In the step 1205, the current connection between the Bluetooth device and the first terminal is disconnected, a connection state report is sent to the second terminal for indicating that the Bluetooth device is not in the HSP connection, and the present processing flow ends.

In the step 1206, a Bluetooth device interface is used for notifying the user.

In a step 1207, a command is received to determine whether to change the state of the Bluetooth device. If it is determined to change the state of the Bluetooth device, a step 1209 is performed. If it is determined not to change the state of the Bluetooth device, a step 1208 is performed.

In the step 1208, the connection between the Bluetooth device and the first terminal is maintained, a connection state report is sent to the second terminal for indicating that the Bluetooth device is in the HSP connection and is performing the calling function, and the present processing flow ends.

In the step 1209, the connection between the Bluetooth device and the first terminal is disconnected, and a connection state report is sent to the second terminal for indicating that the Bluetooth device is not in the HSP connection.

FIG. 13 is a schematic diagram illustrating a determining process of the terminal side after receiving a connection state report when the second terminal receives the incoming call while the first terminal is calling according to the embodiment 2. As shown in FIG. 13, the determining process of the terminal side after receiving the connection state report when the second terminal receives the incoming call while the first terminal is calling in the embodiment 2 includes the steps described below.

In a step 1301, the second terminal receives a connection state report sent by a Bluetooth device.

In a step 1302, the second terminal determines a connection state of the Bluetooth device in the received connection state report. If the connection state report indicates that the Bluetooth device is in an HSP connection, a step 1303 is performed. If the connection state report indicates that the Bluetooth device is not in the HSP connection, a step 1304 is performed.

In the step 1303, the present processing flow is exited and ends.

In the step 1304, the HSP connection is initiated to the Bluetooth device by using an interface of the second terminal.

In a step 1305, it is determined whether a connection is established between the second terminal and the Bluetooth device. If the connection is established between the second terminal and the Bluetooth device, a step 1306 is performed. If the connection fails to be established between the second terminal and the Bluetooth device, the step 1302 is performed.

In the step 1306, the Bluetooth device is used to answer the incoming call of the second terminal.

The HSP connection in the embodiment 2 may also be replaced with the HFP connection.

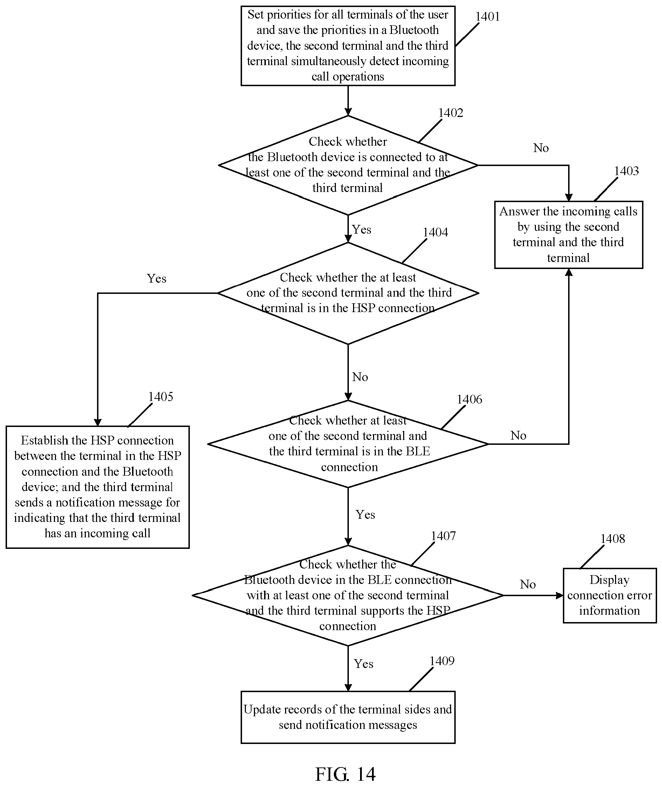

FIG. 14 is a schematic diagram illustrating a determining process of a terminal side when a second terminal and a third terminal simultaneously receive incoming calls while a first terminal is calling according to an embodiment 3 in which the terminals are configured with priorities. As shown in FIG. 14, the determining process of the terminal side when the second terminal and the third terminal simultaneously receive incoming calls while the first terminal is calling in the case where the terminals are configured with priorities in the embodiment 3 includes the steps described below.

In a step 1401, all terminals of the user are configured with priorities and the priorities of the terminals are saved in a Bluetooth device, and the second terminal and the third terminal simultaneously detect incoming call operations.

In a step 1402, it is checked whether the second terminal and the third terminal are connected to the Bluetooth device. If at least one of the second terminal and the third terminal is connected to the Bluetooth device, a step 1404 is performed. If neither of the second terminal and the third terminal is connected to the Bluetooth device, a step 1403 is performed.

The connection may include: a BLE connection, an HSP connection or an HFP connection.

In the step 1403, the incoming calls are answered by using the second terminal and the third terminal, and the present processing flow ends.

In the step 1404, it is checked whether the terminal that is connected to the Bluetooth device is in the HSP connection. If the terminal that is connected to the Bluetooth device is in the HSP connection, a step 1405 is performed. If neither of the second terminal and the third terminal is in the HSP connection, a step 1406 is performed.

In the step 1405, the HSP connection is established between the second terminal in the HSP connection and the Bluetooth device, and the third terminal sends a notification message for indicating that the third terminal receives an incoming call; and the present processing flow ends.

In the step 1406, it is checked whether at least one of the second terminal and the third terminal is in the BLE connection with the Bluetooth device. If at least one of the second terminal and the third terminal is in the BLE connection with the Bluetooth device, a step 1407 is performed. If neither of the second terminal and the third terminal is in the BLE connection with the Bluetooth device, the step 1403 is performed.

In the step 1407, it is checked whether the Bluetooth device that is in the BLE connection with at least one of the second terminal and the third terminal supports the HSP connection. If the Bluetooth device that is in the BLE connection with at least one of the second terminal and the third terminal supports the HSP connection, a step 1409 is performed. If the Bluetooth device that is in the BLE connection with at least one of the second terminal and the third terminal does not support the HSP connection, a step 1408 is performed.

In the step 1408, connection error information is displayed, and the present processing flow ends.

In the step 1409, a record of the second terminal and a record of the third terminal are respectively updated, and notification messages are respectively sent by the second terminal and the third terminal.

Before the step 1401, the method may further include: pairing all the terminals of the user with the Bluetooth device, establishing a BLE connection, and maintaining the BLE connection. The second terminal and the third terminal simultaneously receive an incoming call while the first terminal is calling through the HSP connection with the Bluetooth device.

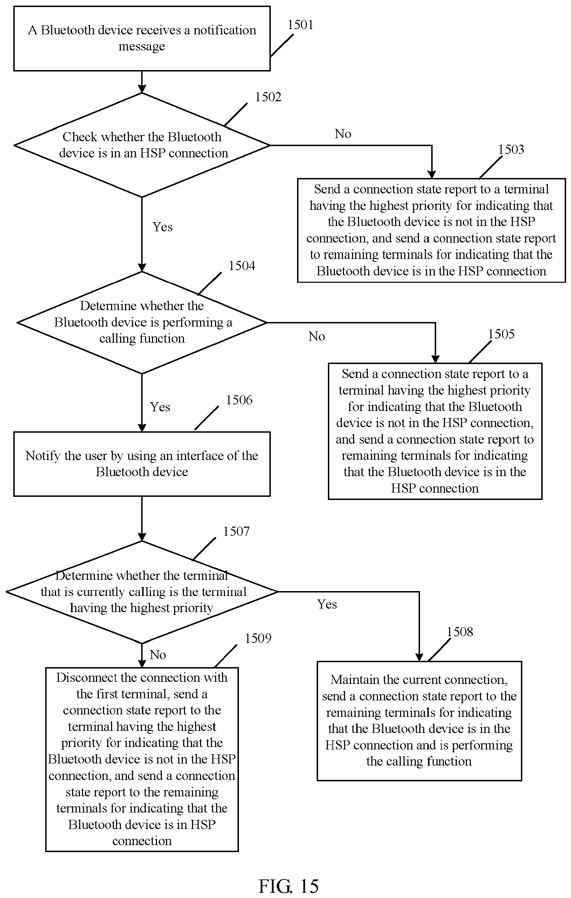

FIG. 15 is a schematic diagram illustrating a working process of a Bluetooth device side when the second terminal and the third terminal simultaneously receive the incoming calls while the first terminal is calling according to the embodiment 3 in which the terminals are configured with priorities. As shown in FIG. 15, the working process of the Bluetooth device side when the second terminal and the third terminal simultaneously receive the incoming calls while the first terminal is calling in the embodiment 3 in which the terminals are configured with priorities includes the steps described below.

In a step 1501, a Bluetooth device receives a notification message.

In a step 1502, it is checked whether the Bluetooth device is in an HSP connection. If the Bluetooth device is in the HSP connection, a step 1504 is performed. If the Bluetooth device is not in the HSP connection, a step 1503 is performed.

In the step 1503, a connection state report is sent to one of the second terminal and the third terminal that has a higher priority, the connection state report is used for indicating that the Bluetooth device is not in the HSP connection, a connection state report is sent to one of the second terminal and the third terminal has a lower for indicating that the Bluetooth device is in the HSP connection, and the present processing flow ends.

In the step 1504, it is determined whether the Bluetooth device is performing a calling function. If the Bluetooth device is performing the calling function, a step 1506 is performed. If the Bluetooth device is not performing the calling function, a step 1505 is performed.

In the step 1505, the current connection between the Bluetooth device and the first terminal is disconnected, a connection state report is sent to one of the second terminal and the third terminal that has a higher priority for indicating that the Bluetooth device is not in the HSP connection, a connection state report is sent to one of the second terminal and the third terminal that has a lower priority for indicating that the Bluetooth device is the HSP connection, and the present processing flow ends.

In the step 1506, an interface of the Bluetooth device is used for notifying the user.

In a step 1507, it is determined whether the terminal that is currently calling is the terminal having the highest priority. If the terminal that is currently calling is the terminal having the highest priority, a step 1508 is performed. If the terminal that is currently calling is not the terminal having the highest priority, a step 1509 is performed.

In the step 1508, the current connection is maintained, a connection state report is sent to other terminals for indicating that the Bluetooth device is in the HSP connection and is performing the calling function, and the processing flow ends.

In the step 1509, the connection between the Bluetooth device and the first terminal is disconnected, a connection state report is sent to the terminal having the highest priority for indicating that the Bluetooth device is not in the HSP connection, and a connection state report is sent to the remaining terminal for indicating that the Bluetooth device is in the HSP connection.

The user may configure the priority for all terminals and record the priorities of the terminals in the Bluetooth device. In the case where the Bluetooth device is connected to one terminal of the user and is used in calling, when any one of other terminals receives an incoming call or any multiple ones of other terminals simultaneously or sequentially receive incoming calls, the device may automatically select the terminal having the highest priority and perform the calling function thereof according to the above method, which reduces the operation steps of the user and avoids the user missing the important call.

FIG. 16 is a schematic diagram illustrating a determining process of the terminal side after receiving a connection state report when the second terminal and the third terminal simultaneously receive the incoming calls while the first terminal is calling in the case where the terminals are configured with priorities according to the embodiment 3. As shown in FIG. 16, the determining process of the terminal side after receiving the connection state report when the second terminal and the third terminal simultaneously receive the incoming calls while the first terminal is calling in the case where the terminals are configured with priorities in the embodiment 3 includes the steps described below.

In a step 1601, a second terminal and a third terminal receive connection state reports.

A connection state report received by the terminal having the highest priority may indicate that the Bluetooth device is not in an HSP connection, the HSP connection is allowed to be established between the terminal having the highest priority and the Bluetooth device, and the terminal having the highest priority can perform calling by using the Bluetooth device. A connection state report received by the remaining terminals indicates that the Bluetooth device is in the HSP connection and the HSP connection cannot be established between the remaining terminals and the Bluetooth device.

In a step 1602, the terminal (one of the second terminal and the third terminal that has a higher priority) determines a connection state of the Bluetooth device in the connection state report. If the connection state report indicates that the Bluetooth device is in the HSP connection, a step 1603 is performed. If the connection state report indicates that the Bluetooth device is not in the HSP connection, a step 1604 is performed.

In the step 1603, the present processing flow is exited and ends.

In the step 1604, the terminal that receives the connection state report indicating that the Bluetooth device is not in the HSP connection initiates the HSP connection to the Bluetooth device, and the incoming calls of the remaining terminals are answered by the remaining terminals.

In a step 1605, it is determined whether a connection is established between the terminal and the Bluetooth device. If the connection is established between the terminal and the Bluetooth device, a step 1606 is performed. If the connection is not established between the terminal and the Bluetooth device, the step 1602 is performed.

In the step 1606, the Bluetooth device is used for answering the call.

The HSP connection in the embodiment 3 may also be replaced with the HFP connection.

FIG. 17 is a schematic diagram illustrating a determining process of a terminal side when a second terminal and a third terminal simultaneously receive incoming calls while a first terminal is calling according to an embodiment 4. As shown in FIG. 17, the determining process of the terminal side when the second terminal and the third terminal simultaneously receive incoming calls while the first terminal is calling in the embodiment 4 includes the steps described below.

In a step 1701, the second terminal and the third terminal simultaneously detect incoming call operations.

In a step 1702, it is checked whether at least one of the second terminal and the third terminal is connected to the Bluetooth device. If at least one of the second terminal and the third terminal is connected to the Bluetooth device, a step 1704 is performed. If neither of the second terminal and the third terminal is connected to the Bluetooth device, a step 1703 is performed.

The connection may include: a BLE connection, an HSP connection or an HFP connection.

In the step 1703, the incoming calls are answered by using the second terminal and the third terminal respectively, and the present processing flow ends.

In the step 1704, it is checked whether at least one of the second terminal and the third terminal is in the HSP connection. If at least one of the second terminal and the third terminal is in the HSP connection, a step 1705 is performed. If neither of the second terminal and the third terminal is in the HSP connection, a step 1706 is performed.

In the step 1705, the HSP connection is established between the terminal in the HSP connection and the Bluetooth device; the remaining terminal sends a notification message for indicating that the terminal receives an incoming call; and the present processing flow ends.

In a step 1706, it is checked whether at least one of the second terminal and the third terminal is in the BLE connection. If at least one of the second terminal and the third terminal is in the BLE connection, a step 1707 is performed. If neither of the second terminal and the third terminal is in the BLE connection, the step 1703 is performed.

In the step 1707, it is checked whether the Bluetooth device that maintains the BLE connection with at least one of the second terminal and the third terminal supports the HSP connection. If the Bluetooth device that maintains the BLE connection with at least one of the second terminal and the third terminal supports the HSP connection, a step 1709 is performed. If the Bluetooth device that maintains the BLE connection with at least one of the second terminal and the third terminal does not support the HSP connection, a step 1708 is performed.

In the step 1708, connection error information is displayed, and the processing flow ends.

In the step 1709, a record of the second terminal and a record of the third terminal are respectively updated, and the second terminal and the third terminal each send a notification message.

Before the step 1701, the method may further include: all the terminals of the user establishing and maintaining the BLE connection with the Bluetooth device. The second terminal and the third terminal each receive an incoming call while the first terminal is calling through the HSP connection or the HFP connection.

FIG. 18 is a schematic diagram illustrating a working process of a Bluetooth device side when the second terminal and the third terminal simultaneously receive the incoming calls while the first terminal is calling according to the embodiment 4. As shown in FIG. 18, the working process of the Bluetooth device side when the second terminal and the third terminal simultaneously receive the incoming calls while the first terminal is calling in the embodiment 4 includes the steps described below.

In a step 1801, a Bluetooth device receives a notification message.

In a step 1802, it is checked whether the Bluetooth device is in an HSP connection. If the Bluetooth device is in the HSP connection, a step 1804 is performed. If the Bluetooth device is not in the HSP connection, a step 1803 is performed.

In the step 1803, a connection state report is sent to the terminal having the highest priority for indicating that the Bluetooth device is not in the HSP connection, and a connection state report is sent to the remaining terminals for indicating that the Bluetooth device is in the HSP connection, and the present processing flow ends.

In the step 1804, it is determined whether the Bluetooth device is performing a calling function. If the Bluetooth device is performing the calling function, a step 1806 is performed. If the Bluetooth device is not performing the calling function, a step 1805 is performed.

In the step 1805, the connection between the Bluetooth device and the first terminal is disconnected, a connection state report is sent to the selected terminal for indicating that the Bluetooth device is not in the HSP connection, and a connection state report is sent to the remaining terminals for indicating that the Bluetooth device is in the HSP connection.

In the step 1806, an interface of the Bluetooth device is used to notify the user.

In a step 1807, it is determined whether to change the connection state of the Bluetooth device according to a user command. If it is determined not to change the connection state of the Bluetooth device, a step 1808 is performed. If it is determined to change the connection state of the Bluetooth device, a step 1809 is performed.

In the step 1808, the current connection is maintained, a connection state report is sent to the remaining terminals for indicating that the Bluetooth device is in the HSP connection and is performing the calling function, and the present processing flow ends.

In the step 1809, the connection between the Bluetooth device and the first terminal is disconnected, a connection state report is sent to the terminal selected to perform calling where the connection state report indicates that the Bluetooth device is not in the HSP connection, and a connection state report is sent to the remaining terminals for indicating that the Bluetooth device is in the HSP connection.

In the case the Bluetooth device is connected to a terminal of the user and used for calling, when any other terminal receives an incoming call or any other terminals simultaneously or sequentially receive an incoming call, the device may automatically select a terminal to perform calling according to the above method, which avoids the user missing the important call.

FIG. 19 is a schematic diagram illustrating a determining process of the terminal side after receiving a connection state report when the second terminal and the third terminal simultaneously receive the incoming calls while the first terminal is calling according to the embodiment 4. As shown in FIG. 19, the determining process of the terminal side after receiving the connection state report when the second terminal and the third terminal simultaneously receive the incoming calls while the first terminal is calling in the embodiment 4 includes the steps described below.

In a step 1901, a second terminal and a third terminal receive connection state reports.

The connection state report received by one of the second terminal and the third terminal that is selected to perform calling may indicate that the Bluetooth device is not in the HSP connection, the HSP connection may be established between the terminal selected to perform calling and the Bluetooth device, and the Bluetooth device is used for the calling of the selected terminal. The connection state report received by the remaining terminal indicates that the Bluetooth device is in the HSP connection, so the HSP connection cannot be established between the remaining terminal and the Bluetooth device. The user determines that the terminal that is using the Bluetooth device to perform calling keeps the calling state unchanged, the connection state report received by the remaining terminal indicates that the Bluetooth device is in the HSP connection and the HSP connection cannot be established between the remaining terminal and the Bluetooth device.

In a step 1902, a terminal (one of the second terminal and the third terminal that is selected to perform calling) determines a connection state of the Bluetooth device according to the connection state report. If the connection state report indicates that the Bluetooth device is in the HSP connection, a step 1903 is performed. If the connection state report indicates that the Bluetooth device is not HSP connection, a step 1904 is performed.

In the step 1903, the present processing flow is exited and ends.

In the step 1904, the terminal receiving the connection state report indicating that the Bluetooth device is not in the HSP connection initiates the HSP connection to the Bluetooth device, and the incoming call of the remaining terminal is answered by using the remaining terminal.

In a step 1905, it is determined whether the terminal is connected to the Bluetooth device. If the terminal is connected to the Bluetooth device, a step 1906 is performed. If the terminal fails to be connected to the Bluetooth device, the step 1902 is performed.

In the step 1906, the Bluetooth device is used in answering the call.

The HSP connection in the embodiment 4 may also be replaced with the HFP connection.

FIG. 20 is a schematic diagram illustrating a determining process of a terminal side when a first terminal detects an audio playback operation according to an embodiment 5. As shown in FIG. 20, the determining process of the terminal side when the first terminal detects the audio playback operation in the embodiment 5 includes the steps described below.

In a step 2001, the first terminal detects an audio playback operation.

In a step 2002, it is checked whether the first terminal is connected to a Bluetooth device. If the first terminal is connected to the Bluetooth device, a step 2004 is performed. If the first terminal is not connected to the Bluetooth device, a step 2003 is performed.

The connection between the first terminal and the Bluetooth device may include: a BLE connection and an A2DP connection.

In the step 2003, the first terminal plays audio, and the processing flow ends.

In the step 2004, it is checked whether the first terminal is in the A2DP connection. If the first terminal is in the A2DP connection, a step 2005 is performed. If the first terminal is not in the A2DP connection, a step 2006 is performed.

In the step 2005, the Bluetooth device plays audio, and the processing flow ends.

In the step 2006, it is checked whether the first terminal is in the BLE connection. If the first terminal is not in the BLE connection, a step 2007 is performed. If the first terminal is not in the BLE connection, the step 2003 is performed.

In the step 2007, it is checked whether the Bluetooth device which is in the BLE connection with the terminal supports the A2DP connection. If the Bluetooth device which is in the BLE connection with the terminal supports the A2DP connection, a step 2009 is performed. If the Bluetooth device which is in the BLE connection with the terminal does not support the A2DP connection, a step 2008 is performed.

In the step 2008, connection error information is displayed, and the processing flow ends.

In the step 2009, a record on the first terminal side is updated and a notification message is sent.

At least one of audio information and video information stored in the terminal, received audio information, and received video information can be played for the user through the A2DP connection and the Bluetooth device.

FIG. 21 is a schematic diagram illustrating a working process of a Bluetooth device side when the first terminal detects the audio playback operation according to the embodiment 5. As shown in FIG. 21, the working process of the Bluetooth device side when the first terminal detects the audio playback operation in the embodiment 5 includes the steps described below.

In a step 2101, a Bluetooth device receives a notification message.

In a step 2102, it is checked whether the Bluetooth device is in an A2DP connection. If the Bluetooth device is in the A2DP connection, a step 2104 is performed. If the Bluetooth device is not in the A2DP connection, a step 2103 is performed.

In the step 2103, a connection state report is sent to the first terminal for indicating that the Bluetooth device is not in the A2DP connection, and the processing flow ends.

In the step 2104, it is determined whether the Bluetooth device is playing audio. If the Bluetooth device is playing audio, a step 2106 is performed. If the Bluetooth device is not playing audio, a step 2105 is performed.

In the step 2105, the current A2DP connection is disconnected, a connection state report is sent to the first terminal for indicating that the Bluetooth device is not in the A2DP connection, and the processing flow ends.

In the step 2106, an interface of the Bluetooth device is used for notifying the user.

In the step 2107, a command is received to determine whether to change the connection state of the Bluetooth device. If it is determined to change the connection state of the Bluetooth device, a step 2109 is performed. If it is determined not to change the connection state of the Bluetooth device, a step 2108 is performed.

In the step 2108, the current connection state of the Bluetooth device is maintained, a connection state report is sent to the first terminal for indicating that the A2DP connection is established for the Bluetooth device and the A2DP connection is in use or indicating that the A2DP connection is established for the Bluetooth device but the A2DP connection is not in use, and the processing flow ends.

In the step 2109, the current connection is disconnected, and a connection state report is sent to the first terminal for indicating that the Bluetooth device is not in the A2DP connection.

FIG. 22 is a schematic diagram illustrating a determining process of the terminal side after receiving a connection state report when the first terminal detects the audio playback operation according to the embodiment 5. As shown in FIG. 22, the determining process of the terminal side after receiving the connection state report when the first terminal detects the audio playback operation in the embodiment 5 includes the steps described below.

In a step 2201, the first terminal receives a connection state report sent by a Bluetooth device.

In a step 2202, the first terminal determines a connection state of the Bluetooth device according to the connection state report. If the connection state report indicates that the Bluetooth device is in the A2DP connection, a step 2203 is performed. If the connection state report indicates that the Bluetooth device is not in the A2DP connection, a step 2204 is performed.

In the step 2203, the processing flow is exited and ends.

In the step 2204, an interface of the first terminal is used for initiating the A2DP connection to the Bluetooth device.

In a step 2205, it is determined whether the A2DP connection is established between the first terminal and the Bluetooth device. If the A2DP connection is established between the terminal and the Bluetooth device, a step 2206 is performed. If the A2DP connection fails to be established between the terminal and the Bluetooth device, the step 2202 is performed.

In the step 2206, the Bluetooth device is used to play audio.

When two or more terminals perform audio playback switching, the processing methods of the embodiment 2 to the embodiment 5 described above may be used as the processing manner and processing flow of the switching.

Alternatively, if the terminals are configured with priorities, the Bluetooth device may make a selection according to the detected connection state of the Bluetooth device itself and the set priorities.

The Bluetooth device may include a vehicle-mounted Bluetooth device and a Bluetooth headset.

An embodiment provides a system for connecting a terminal with a Bluetooth device. The system includes the Bluetooth device and two or more terminals.

Each of the two or more terminals is configured to establish and maintain a BLE connection with the Bluetooth device; detect an operation triggering a change in its state; send a notification message to the Bluetooth device upon detecting the operation triggering the change in its state; and receive a connection state report from the Bluetooth device, and initiate, according to the received connection state report, a connection request to the Bluetooth device. The connection request is used for indicating that the terminal requests to establish a Bluetooth communication connection with the Bluetooth device.

The Bluetooth device is configured to establish and maintain the BLE connection with the two or more terminals, receive the notification message, detect its own connection state, and send connection state reports to the terminals according to the detected connection state and the notification message.

Alternatively, the Bluetooth device may further be configured to perform one of following operations.

The Bluetooth device establishes and maintains the HSP connection between the Bluetooth device and at least one of the two or more terminals.

The Bluetooth device establishes and maintains the HFP connection between the Bluetooth device and at least one of the two or more terminals.

The Bluetooth device establishes and maintains the A2DP connection between the Bluetooth device and at least one of the two or more terminals.

An embodiment provides a terminal. The terminal includes a first processor 230. The first processor is configured to establish and maintain a BLE connection with the Bluetooth device; detect an operation triggering state change of the terminal; send a notification message to the Bluetooth device upon detecting the operation triggering the state change of the terminal; and receive a connection state report from the Bluetooth device, and initiate, according to the received connection state report, a connection request to the Bluetooth device. The connection request is used for indicating that the terminal requests to establish a non-BLE Bluetooth communication connection with the Bluetooth device.

Referring to FIG. 23, the terminal provided in the above embodiment may further include:
a first memory 231, a first communications interface 232 and a first bus 233. The first processor 230, the first memory 231 and the first communications interface 232 may communicate with each other via the first bus 233. Information may be transmitted via the first communications interface 232. The first processor 230 may execute logic instructions in the first memory 231 to implement the method executed by the terminal in the above embodiments.

In addition, the logic instructions in the first memory 231 may be implemented in the form of a software functional unit and, when sold or used as an independent product, may be stored in a computer-readable storage medium.

As a computer-readable storage medium, the first memory 231 may be used for storing software programs and computer-executable programs, such as program instructions or modules corresponding to the method in the above-mentioned embodiments. The first processor 230 runs the software programs, instructions or modules stored in the first memory 231 to execute function applications and data processing, that is, to implement the method executed by the terminal in the above embodiments.

The first memory 231 may include a program storage area and a data storage area. The program storage area may store an operating system and an application program required for implementing at least one function. The data storage area may store data created depending on use of the terminal. In addition, the first memory 231 may include a high-speed random access memory, and may further include a non-volatile memory.

An embodiment provides a Bluetooth device. The Bluetooth device includes a second processor 240. The second processor is configured to establish and maintain a BLE connection between the Bluetooth device and a terminal; receive a notification message; detect a connection state of the Bluetooth device; and send a connection state report to the terminal according to the detected connection state and the notification message.

The Bluetooth device may be configured to perform one of the following operations.

The Bluetooth device establishes and maintains the HSP connection between the Bluetooth device and the terminal.

The Bluetooth device establishes and maintains the HFP connection between the Bluetooth device and the terminal.

The Bluetooth device establishes and maintains the A2DP connection between the Bluetooth device and the terminal.

Referring to FIG. 24, the Bluetooth device provided in the above embodiment may further include:
a second memory 241, and may further include a second communications interface 242 and a second bus 243. The second processor 240, the second memory 241 and the second communications interface 242 may communicate with each other via the second bus 243. Information may be transmitted via the second communications interface 242. The second processor 240 may execute logic instructions in the second memory 241 to implemented the method executed by the Bluetooth device in the above embodiments.

In addition, the logic instructions in the second memory 241 may be implemented in the form of a software functional unit and, when sold or used as an independent product, may be stored in a computer-readable storage medium.

As a computer-readable storage medium, the second memory 241 may be used for storing software programs and computer-executable programs, such as program instructions or modules corresponding to the method executed by the Bluetooth device in the above embodiments. The second processor 240 runs the software programs, instructions or modules stored in the second memory 241 to execute function applications and data processing, that is, to implement the method executed by the Bluetooth device in the above embodiments.

The second memory 241 may include a program storage area and a data storage area. The program storage area may store an operating system and an application program required for implementing at least one function. The data storage area may store data created depending on use of the terminal. In addition, the second memory 241 may include a high-speed random access memory, and may further include a non-volatile memory.

An embodiment further provides a computer-readable storage medium configured to store computer-executable instructions for executing the method in any one of embodiments described above.

The technical solutions of the embodiments described above may be embodied in the form of a software product that is stored in a storage medium and the storage medium includes one or more instructions for enabling a computer device (which may be a personal computer, a server, or a network device, etc.) to perform all or part of the steps of the method provided in each embodiment described above. The foregoing storage medium may be a non-transient storage medium, such as a USB flash disk, a mobile hard disk, a read-only memory (ROM), a random access memory (RAM), a magnetic disk, an optical disk or another medium capable of storing program codes, or may be a transient storage medium.

### INDUSTRIAL APPLICABILITY

The method, apparatus, system, and device for connecting to the Bluetooth device enables at least two terminals to be connected to the Bluetooth device simultaneously.

## Claims

1. A method for connecting a terminal to a Bluetooth device, comprising:
establishing and maintaining (101), by two or more terminals, a Bluetooth low energy, BLE, connection with the Bluetooth device;
sending (102, 509), by one terminal of the two or more terminals, a notification message to the Bluetooth device upon detecting (501) an operation triggering a state change of the terminal; and
receiving (103), by the one terminal of the two or more terminals, a connection state report sent by the Bluetooth device ,and,
in a case that the connection state report indicates that a non-BLE Bluetooth communication connection of a specific type between the Bluetooth device and another terminal of the two or more terminals is not established,
initiating (103, 704), with the BLE connection maintained, a connection request to the Bluetooth device to establish a Bluetooth communication connection, wherein the connection request is used for indicating that the terminal requests to establish the non-BLE Bluetooth communication connection of the specific type with the Bluetooth device.

2. The method of claim 1, wherein detecting the operation triggering the state change of the terminal comprises one of:
detecting, by the terminal, an incoming call operation;
detecting, by the terminal, an outgoing call operation;
detecting, by the terminal, a hanging up call operation;
detecting, by the terminal, an audio playback operation; and
detecting, by the terminal, an operation of stopping audio playback.

3. The method of claim 1, wherein sending the notification message comprises one of:
sending a message for a communication connection;
sending a message for ending a communication connection;
sending a message for audio playback; and
sending a message for stopping audio playback.

4. The method of claim 1 or 2, wherein the initiating, with the BLE connection maintained, the connection request to the Bluetooth device comprises one of:
initiating, by the one terminal of the two or more terminals, a request to establish a Bluetooth hands free profile, HFP, connection with the Bluetooth device;
initiating, by the one terminal of the two or more terminals, a request to establish a Bluetooth headset profile, HSP, connection with the Bluetooth device;
initiating, by the one terminal of the two or more terminals, a request to disconnect the HFP connection with the Bluetooth device and only maintain the BLE connection;
initiating, by the one terminal of the two or more terminals, a request to disconnect the HSP connection with the Bluetooth device and only maintain the BLE connection;
initiating, by the one terminal of the two or more terminals, a request to establish an advanced audio distribution profile, A2DP, connection with the Bluetooth device; and
initiating, by the one terminal of the two or more terminals, a request to disconnect the A2DP connection with the Bluetooth device and only maintain the BLE connection.

5. The method of claim 1, wherein the one terminal of the two or more terminals requesting to establish the non-BLE Bluetooth communication connection with the Bluetooth device comprises one of:
requesting, by the one terminal of the two or more terminals, to establish a headset profile, HSP, connection with the Bluetooth device;
requesting, by the one terminal of the two or more terminals, to establish a hands free profile, HFP, connection with the Bluetooth device; and
requesting, by the one terminal of the two or more terminals, to establish an advanced audio distribution profile, A2DP, connection with the Bluetooth device.

6. A method for connecting a Bluetooth device to a terminal, comprising: establishing and maintaining (301), by the Bluetooth device, a Bluetooth low energy, BLE, connection with two or more terminals;
receiving (302, 601), by the Bluetooth device, a notification message sent by one of the two or more terminals;
detecting (302, 602, 604), by the Bluetooth device, a connection state of the Bluetooth device, sending (302, 603, 605, 608, 609), by the Bluetooth device, a connection state report to the one of the two or more terminals according to the detected connection state and the notification message;
receiving (103, 704), by the Bluetooth device, with the BLE connection maintained, a connection request which is initiated by the one terminal of the two or more terminals in a case that the connection state report indicates that a non-BLE Bluetooth communication connection of a specific type between the Bluetooth device and another terminal is not established; and establishing, in response to the connection request by the Bluetooth device, the non-BLE Bluetooth communication connection of the specific type with the one terminal of the two or more terminals;
wherein the connection request indicates that the one terminal of the two or more terminals requests to establish the non-BLE Bluetooth communication connection of the specific type with the Bluetooth device.

7. The method of claim 6, wherein the connection state of the Bluetooth device comprises one of the following:
a hands free profile, HFP, connection is not established;
a headset profile, HSP, connection is not established;
the HFP connection is established but the Bluetooth device is not performing a calling function;
the HSP connection is established but the Bluetooth device is not performing the calling function;
the HFP connection is established and the Bluetooth device is performing the calling function;
the HSP connection is established and the Bluetooth device is performing the calling function;
an advanced audio distribution profile, A2DP, connection is not established;
the A2DP connection is established and in use; and
the A2DP connection is established but not in use.

8. The method of claim 6, wherein the connection state report of the Bluetooth device comprises one of:
the Bluetooth device being in an HFP connection established state;
the Bluetooth device being in an HSP connection established state; and
the Bluetooth device being in an A2DP connection established state.

9. The method of claim 6, further comprising one of following operations:
establishing and maintaining an HSP connection or an HFP connection between the Bluetooth device and the one terminal of the two or more terminals; and
establishing and maintaining an A2DP connection between the Bluetooth device and the one terminal of the two or more terminals.

10. The method of claim6, wherein the connection request which is initiated by one terminal of the two or more terminals according to the connection state report and received by the Bluetooth device with the BLE connection maintained comprises one of:
a request initiated by one terminal of the two or more terminals for establishing an HFP connection with the Bluetooth device;
a request initiated by one terminal of the two or more terminals for establishing an HSP connection with the Bluetooth device;
a request initiated by one terminal of the two or more terminals for disconnecting the HFP connection with the Bluetooth device and only maintaining the BLE connection;
a request initiated by one terminal of the two or more terminals for disconnecting the HSP connection with the Bluetooth device and only maintaining the BLE connection;
a request initiated by one terminal of the two or more terminals for establishing an A2DP connection with the Bluetooth device; and
a request initiated by one terminal of the two or more terminals for disconnecting the A2DP connection with the Bluetooth device and only maintaining the BLE connection.

11. The method of claim 6, further comprising one of:
with the BLE connection maintained, the Bluetooth device switching from a state in which the Bluetooth device is in an HFP connection and performs a calling function to a state in which the Bluetooth device is not in the HFP connection;
with the BLE connection maintained, the Bluetooth device switching from a state in which the Bluetooth device is in an HSP connection and performs the calling function to a state in which the Bluetooth device is not in the HSP connection;
with the BLE connection maintained, the Bluetooth device switching from the state in which the Bluetooth device is in the HFP connection and performs the calling function to a state in which the Bluetooth device is in the HFP connection but is not performing the calling function;
with the BLE connection maintained, the Bluetooth device switching from the state in which the Bluetooth device is in the HSP connection and performs the calling function to a state in which the Bluetooth device is in the HSP connection but is not performing the calling function;
with the BLE connection maintained, the Bluetooth device switching from a state in which the Bluetooth device is in an A2DP connection and the A2DP connection is in use to a state in which the Bluetooth device is not in the A2DP connection; and
with the BLE connection maintained, the Bluetooth device switching from the state in which the Bluetooth device is in the A2DP connection and the A2DP connection is in use to a state in which the Bluetooth device is in the A2DP connection but the A2DP connection is not in use.

12. The method of claim 6, wherein establishing, in response to the connection request, by the Bluetooth device, the non-BLE Bluetooth communication connection with the one terminal of the two or more terminals comprises one of:
establishing, by the Bluetooth device, an HSP connection with the one terminal of the two or more terminals;
establishing, by the Bluetooth device, an HFP connection with the one terminal of the two or more terminals; and
establishing, by the Bluetooth device, an A2DP connection with the one terminal of the two or more terminals.

13. A Bluetooth device, comprising a processor which is configured to perform the method of any of claims 6-12.

## Patentansprüche

1. Verfahren zum Verbinden eines Endgeräts mit einer Bluetooth-Vorrichtung, das Folgendes umfasst:
Aufbauen und Halten (101) einer Bluetooth-Low-Energy(BLE)-Verbindung mit der Bluetooth-Vorrichtung durch zwei oder mehr Endgeräte;
Senden (102, 509) einer Benachrichtigungsnachricht durch ein Endgerät der zwei oder mehr Endgeräte an die Bluetooth-Vorrichtung nach Detektieren (501) einer Operation, die eine Statusänderung des Endgeräts auslöst;
und
Empfangen (103) eines Verbindungsstatusberichts, der von der Bluetooth-Vorrichtung gesendet wird, durch das eine Endgerät der zwei oder mehr Endgeräte und
in einem Fall, in dem der Verbindungsstatusbericht anzeigt, dass eine Nicht-BLE-Bluetooth-Kommunikationsverbindung eines spezifischen Typs zwischen der Bluetooth-Vorrichtung und einem anderen Endgerät der zwei oder mehr Endgeräte nicht aufgebaut ist,
Initiieren (103, 704) einer Verbindungsanforderung bei der Bluetooth-Vorrichtung zum Aufbauen einer Bluetooth-Kommunikationsverbindung bei gehaltener BLE-Verbindung, wobei die Verbindungsanforderung verwendet wird, um anzuzeigen, dass das Endgerät das Aufbauen der Nicht-BLE-Bluetooth-Kommunikationsverbindung des spezifischen Typs mit der Bluetooth-Vorrichtung anfordert.

2. Verfahren nach Anspruch 1, wobei das Detektieren der Operation, die die Statusänderung des Endgeräts auslöst, eines von Folgendem umfasst:
Detektieren einer Operation eines ankommenden Anrufs durch das Endgerät;
Detektieren einer Operation eines abgehenden Anrufs durch das Endgerät;
Detektieren einer Operation des Beendens eines Anrufs durch das Endgerät;
Detektieren einer Operation einer Audiowiedergabe durch das Endgerät und
Detektieren einer Operation des Abbrechens der Audiowiedergabe durch das Endgerät.

3. Verfahren nach Anspruch 1, wobei das Senden der Benachrichtigungsnachricht eines von Folgendem umfasst:
Senden einer Nachricht für eine Kommunikationsverbindung;
Senden einer Nachricht zum Beenden einer Kommunikationsverbindung;
Senden einer Nachricht für eine Audiowiedergabe und
Senden einer Nachricht zum Abbrechen einer Audiowiedergabe.

4. Verfahren nach Anspruch 1 oder 2, wobei das Initiieren der Verbindungsanforderung bei gehaltener BLE-Verbindung bei der Bluetooth-Vorrichtung eines von Folgendem umfasst:
Initiieren einer Anforderung zum Aufbauen einer Bluetooth-Freisprechprofil(HFP)-Verbindung mit der Bluetooth-Vorrichtung durch das eine Endgerät der zwei oder mehr Endgeräte;
Initiieren einer Anforderung zum Aufbauen einer Bluetooth-Headsetprofil(HSP)-Verbindung mit der Bluetooth-Vorrichtung durch das eine Endgerät der zwei oder mehr Endgeräte;
Initiieren einer Anforderung zum Trennen der HFP-Verbindung mit der Bluetooth-Vorrichtung und Halten nur der BLE-Verbindung durch das eine Endgerät der zwei oder mehr Endgeräte;
Initiieren einer Anforderung zum Trennen der HSP-Verbindung mit der Bluetooth-Vorrichtung und Halten nur der BLE-Verbindung durch das eine Endgerät der zwei oder mehr Endgeräte;
Initiieren einer Anforderung zum Aufbauen einer erweiterten Audioverteilungsprofil(A2DP)-Verbindung mit der Bluetooth-Vorrichtung durch das eine Endgerät der zwei oder mehr Endgeräte
und
Initiieren einer Anforderung zum Trennen der A2DP-Verbindung mit der Bluetooth-Vorrichtung und Halten nur der BLE-Verbindung durch das eine Endgerät der zwei oder mehr Endgeräte.

5. Verfahren nach Anspruch 1, wobei das Anfordern des Aufbaus der Nicht-BLE-Bluetooth-Kommunikationsverbindung mit der Bluetooth-Vorrichtung durch das eine Endgerät der zwei oder mehr Endgeräte eines von Folgendem umfasst:
Anfordern des Aufbaus einer Headsetprofil(HSP)-Verbindung mit der Bluetooth-Vorrichtung durch das eine Endgerät der zwei oder mehr Endgeräte;
Anfordern des Aufbaus einer Freisprechprofil(HFP)-Verbindung mit der Bluetooth-Vorrichtung durch das eine Endgerät der zwei oder mehr Endgeräte und
Anfordern des Aufbaus einer erweiterten Audioverteilungsprofil(A2DP)-Verbindung mit der Bluetooth-Vorrichtung durch das eine Endgerät der zwei oder mehr Endgeräte.

6. Verfahren zum Verbinden einer Bluetooth-Vorrichtung mit einem Endgerät, das Folgendes umfasst:
Aufbauen und Halten (301) einer Bluetooth-Low-Energy(BLE)-Verbindung mit zwei oder mehr Endgeräten durch die Bluetooth-Vorrichtung;
Empfangen (302, 601) einer Benachrichtigungsnachricht, die von einem der zwei oder mehr Endgeräte gesendet wird, durch die Bluetooth-Vorrichtung;
Detektieren (302, 602, 604) eines Verbindungsstatus der Bluetooth-Vorrichtung durch die Bluetooth-Vorrichtung, Senden (302, 603, 605, 608, 609) eines Verbindungsstatusberichts durch die Bluetooth-Vorrichtung gemäß dem detektierten Verbindungsstatus und der Benachrichtigungsnachricht an das eine der zwei oder mehr Endgeräte;
in einem Fall,
in dem der Verbindungsstatusbericht anzeigt, dass eine Nicht-BLE-Bluetooth-Kommunikationsverbindung eines spezifischen Typs zwischen der Bluetooth-Vorrichtung und einem anderen Endgerät nicht aufgebaut ist, Empfangen (103, 704) einer Verbindungsanforderung, die von einem Endgerät der zwei oder mehr Endgeräte initiiert wird, bei gehaltener BLE-Verbindung durch die Bluetooth-Vorrichtung und
in Reaktion auf die Verbindungsanforderung durch die Bluetooth-Vorrichtung Aufbauen der Nicht-BLE-Bluetooth-Kommunikationsverbindung des spezifischen Typs mit dem einen Endgerät der zwei oder mehr Endgeräte;
wobei die Verbindungsanforderung anzeigt, dass das eine Endgerät der zwei oder mehr Endgeräte den Aufbau der Nicht-BLE-Bluetooth-Kommunikationsverbindung des spezifischen Typs mit der Bluetooth-Vorrichtung anfordert.

7. Verfahren nach Anspruch 6, wobei der Verbindungsstatus der Bluetooth-Vorrichtung eines von Folgendem umfasst:
eine Freisprechprofil(HFP)-Verbindung ist nicht aufgebaut;
ein Headsetprofil(HSP)-Verbindung ist nicht aufgebaut;
die HFP-Verbindung ist aufgebaut, aber die Bluetooth-Vorrichtung führt keine Anruffunktion durch;
die HSP-Verbindung ist aufgebaut, aber die Bluetooth-Vorrichtung führt die Anruffunktion nicht durch;
die HFP-Verbindung ist aufgebaut und die Bluetooth-Vorrichtung führt die Anruffunktion durch;
die HSP-Verbindung ist aufgebaut und die Bluetooth-Vorrichtung führt die Anruffunktion durch;
eine erweiterte Audioverteilungsprofil(A2DP)-Verbindung ist nicht aufgebaut;
die A2DP-Verbindung ist aufgebaut und in Gebrauch und
die A2DP-Verbindung ist aufgebaut, aber nicht in Gebrauch.

8. Verfahren nach Anspruch 6, wobei der Verbindungsstatusbericht der Bluetooth-Vorrichtung eines von Folgendem umfasst:
die Bluetooth-Vorrichtung weist einen HFP-Verbindung-aufgebaut-Status auf;
die Bluetooth-Vorrichtung weist einen HSP-Verbindung-aufgebaut-Status auf; und
die Bluetooth-Vorrichtung weist einen A2DP-Verbindung-aufgebaut-Status auf.

9. Verfahren nach Anspruch 6, das ferner eine der folgenden Operationen umfasst:
Aufbauen und Halten einer HSP-Verbindung oder einer HFP-Verbindung zwischen der Bluetooth-Vorrichtung und dem einen Endgerät der zwei oder mehr Endgeräte und
Aufbauen und Halten einer A2DP-Verbindung zwischen der Bluetooth-Vorrichtung und dem einen Endgerät der zwei oder mehr Endgeräte.

10. Verfahren nach Anspruch 6, wobei die Verbindungsanforderung, die bei gehaltener BLE-Verbindung von einem Endgerät der zwei oder mehr Endgeräte gemäß dem Verbindungsstatusbericht initiiert und von der Bluetooth-Vorrichtung empfangen wird, eines von Folgendem umfasst:
eine Anforderung zum Aufbauen einer HFP-Verbindung mit der Bluetooth-Vorrichtung, die von einem Endgerät der zwei oder mehr Endgeräte initiiert wird;
eine Anforderung zum Aufbauen einer HSP-Verbindung mit der Bluetooth-Vorrichtung, die von einem Endgerät der zwei oder mehr Endgeräte initiiert wird;
eine Anforderung zum Trennen der HFP-Verbindung mit der Bluetooth-Vorrichtung und nur Halten der BLE-Verbindung, die von einem Endgerät der zwei oder mehr Endgeräte initiiert wird;
eine Anforderung zum Trennen der HSP-Verbindung mit der Bluetooth-Vorrichtung und nur Halten der BLE-Verbindung, die von einem Endgerät der zwei oder mehr Endgeräte initiiert wird;
eine Anforderung zum Aufbauen einer A2DP-Verbindung mit der Bluetooth-Vorrichtung, die von einem Endgerät der zwei oder mehr Endgeräte initiiert wird; und
eine Anforderung zum Trennen der A2DP-Verbindung mit der Bluetooth-Vorrichtung und nur Halten der BLE-Verbindung, die von einem Endgerät der zwei oder mehr Endgeräte initiiert wird.

11. Verfahren nach Anspruch 6, das ferner eines von Folgendem umfasst:
bei gehaltener BLE-Verbindung Umschalten der Bluetooth-Vorrichtung von einem Status, in dem die Bluetooth-Vorrichtung eine HFP-Verbindung aufweist und eine Anruffunktion durchführt, zu einem Status, in dem die Bluetooth-Vorrichtung die HFP-Verbindung nicht aufweist;
bei gehaltener BLE-Verbindung Umschalten der Bluetooth-Vorrichtung von einem Status, in dem die Bluetooth-Vorrichtung eine HSP-Verbindung aufweist und die Anruffunktion durchführt,
zu einem Status, in dem die Bluetooth-Vorrichtung die HSP-Verbindung nicht aufweist;
bei gehaltener BLE-Verbindung Umschalten der Bluetooth-Vorrichtung vom Status, in dem die Bluetooth-Vorrichtung die HFP-Verbindung aufweist und die Anruffunktion durchführt, zu einem Status, in dem die Bluetooth-Vorrichtung die HFP-Verbindung aufweist, die Anruffunktion aber nicht durchführt;
bei gehaltener BLE-Verbindung Umschalten der Bluetooth-Vorrichtung vom Status, in dem die Bluetooth-Vorrichtung die HSP-Verbindung aufweist und die Anruffunktion durchführt, zu einem Status, in dem die Bluetooth-Vorrichtung die HSP-Verbindung aufweist, die Anruffunktion aber nicht durchführt;
bei gehaltener BLE-Verbindung Umschalten der Bluetooth-Vorrichtung von einem Status, in dem die Bluetooth-Vorrichtung eine A2DP-Verbindung aufweist und die A2DP-Verbindung in Gebrauch ist, zu einem Status, in dem die Bluetooth-Vorrichtung die A2DP-Verbindung nicht aufweist; und
bei gehaltener BLE-Verbindung Umschalten der Bluetooth-Vorrichtung vom Status, in dem die Bluetooth-Vorrichtung die A2DP-Verbindung aufweist und die A2DP-Verbindung in Gebrauch ist, zu einem Status, in dem die Bluetooth-Vorrichtung die A2DP-Verbindung aufweist, die A2DP-Verbindung aber nicht in Gebrauch ist.

12. Verfahren nach Anspruch 6, wobei das Aufbauen der Nicht-BLE-Bluetooth-Kommunikationsverbindung mit dem einen Endgerät der zwei oder mehr Endgeräte in Reaktion auf die Verbindungsanforderung durch die Bluetooth-Vorrichtung eines von Folgendem umfasst:
Aufbauen einer HSP-Verbindung mit dem einen Endgerät der zwei oder mehr Endgeräte durch die Bluetooth-Vorrichtung;
Aufbauen einer HFP-Verbindung mit dem einen Endgerät der zwei oder mehr Endgeräte durch die Bluetooth-Vorrichtung; und
Aufbauen einer A2DP-Verbindung mit dem einen Endgerät der zwei oder mehr Endgeräte durch die Bluetooth-Vorrichtung.

13. Bluetooth-Vorrichtung, die einen Prozessor umfasst, der dazu ausgelegt ist, das Verfahren nach einem der Ansprüche 6-12 durchzuführen.

## Revendications

1. Procédé de connexion d'un terminal à un dispositif Bluetooth, comprenant :
l'établissement et le maintien (101), par deux terminaux ou plus, d'une connexion Bluetooth à faible énergie, BLE, au dispositif Bluetooth ;
l'envoi (102, 509), par un terminal des deux terminaux ou plus, d'un message de notification au dispositif Bluetooth lors de la détection (501) d'une opération déclenchant un changement d'état du terminal ;
et
la réception (103), par un terminal parmi les deux terminaux ou plus, d'un rapport d'état de connexion envoyé par le dispositif Bluetooth, et,
dans le cas où le rapport d'état de connexion indique qu'une connexion de communication Bluetooth non BLE d'un type spécifique entre le dispositif Bluetooth et un autre terminal des deux terminaux ou plus n'est pas établie,
le lancement (103, 704), tandis que la connexion BLE est maintenue, d'une demande de connexion au dispositif Bluetooth pour établir une connexion de communication Bluetooth, dans lequel la demande de connexion est utilisée pour indiquer que le terminal demande d'établir la connexion de communication Bluetooth non BLE du type spécifique avec le dispositif Bluetooth.

2. Procédé selon la revendication 1, dans lequel la détection de l'opération déclenchant le changement d'état du terminal comprend l'une des opérations suivantes :
la détection, par le terminal, d'une opération d'appel entrant ;
la détection, par le terminal, d'une opération d'appel sortant ;
la détection, par le terminal, d'une opération de raccrochage d'appel ;
la détection, par le terminal, d'une opération de lecture audio ; et
la détection, par le terminal, d'une opération d'arrêt de la lecture audio.

3. Procédé selon la revendication 1, dans lequel l'envoi du message de notification comprend l'une des opérations suivantes :
l'envoi d'un message pour une connexion de communication ;
l'envoi d'un message pour mettre fin à une connexion de communication ;
l'envoi d'un message pour la lecture audio ; et
l'envoi d'un message pour arrêter la lecture audio.

4. Procédé selon la revendication 1 ou 2, dans lequel le lancement, tandis que la connexion BLE est maintenue, de la demande de connexion au dispositif Bluetooth comprend l'une des opérations suivantes :
le lancement, par l'un des deux terminaux ou plus, d'une demande d'établissement d'une connexion de profil mains libres Bluetooth, HFP, avec le dispositif Bluetooth ;
le lancement, par l'un des deux terminaux ou plus, d'une demande d'établissement d'une connexion de profil de casque Bluetooth, HSP, avec le dispositif Bluetooth ;
le lancement, par l'un des deux terminaux ou plus, d'une demande de déconnexion de la connexion HFP avec le dispositif Bluetooth et de maintien de la connexion BLE uniquement ;
le lancement, par l'un des deux terminaux ou plus, d'une demande de déconnexion de la connexion HSP avec le dispositif Bluetooth et de maintien de la connexion BLE uniquement ;
le lancement, par l'un des deux terminaux ou plus, d'une demande d'établissement d'une connexion de profil de distribution audio avancée, A2DP, avec le dispositif Bluetooth ; et
le lancement, par l'un des deux terminaux ou plus, d'une demande de déconnexion de la connexion A2DP avec le dispositif Bluetooth et de maintien de la connexion BLE uniquement.

5. Procédé selon la revendication 1, dans lequel la demande, par l'un des deux terminaux ou plus, d'établissement de la connexion de communication Bluetooth non BLE avec le dispositif Bluetooth comprend l'une des opérations suivantes :
la demande, par l'un des deux terminaux ou plus, d'établissement d'une connexion de profil de casque, HSP, avec le dispositif Bluetooth ;
la demande, par l'un des deux terminaux ou plus, d'établissement d'une connexion de profil main libres, HFP, avec le dispositif Bluetooth ; et
la demande, par l'un des deux terminaux ou plus, d'établissement d'une connexion de profil de distribution audio avancée, A2DP, avec le dispositif Bluetooth.

6. Procédé de connexion d'un dispositif Bluetooth à un terminal, comprenant :
l'établissement et le maintien (301), par le dispositif Bluetooth, d'une connexion Bluetooth à faible énergie, BLE, aux deux terminaux ou plus ;
la réception (302, 601), par le dispositif Bluetooth, d'un message de notification envoyé par l'un des deux terminaux ou
plus ;
la détection (302, 602, 604), par le dispositif Bluetooth, d'un état de connexion du dispositif Bluetooth envoyant (302, 603, 605, 608, 609), par le dispositif Bluetooth, un rapport d'état de connexion à l'un des deux terminaux ou plus selon l'état de connexion détecté et le message de notification ;
la réception (103, 704),
par le dispositif Bluetooth, tandis que la connexion BLE est maintenue, d'une demande de connexion qui est lancée par l'un des deux terminaux ou plus dans le cas où le rapport d'état de connexion indique qu'une connexion de communication Bluetooth non BLE d'un type spécifique entre le dispositif Bluetooth et un autre terminal n'est pas établie ; et
l'établissement, en réponse à la demande de connexion par le dispositif Bluetooth, de la connexion de communication Bluetooth non BLE du type spécifique avec l'un des deux terminaux ou plus ;
dans lequel la demande de connexion indique qu'un des deux terminaux ou plus demande d'établir la connexion de communication Bluetooth non BLE du type spécifique avec le dispositif Bluetooth.

7. Procédé selon la revendication 6, dans lequel l'état de connexion du dispositif Bluetooth comprend l'un des éléments suivants :
une connexion profil mains libres, HFP, n'est pas établie ;
une connexion profil de casque, HSP, n'est pas établie ;
la connexion HFP est établie mais le dispositif Bluetooth n'exécute pas de fonction d'appel ;
la connexion HSP est établie mais le dispositif Bluetooth n'exécute pas de fonction d'appel ;
la connexion HFP est établie et le dispositif Bluetooth exécute la fonction d'appel ;
la connexion HSP est établie et le dispositif Bluetooth exécute la fonction d'appel ;
une connexion de profil de distribution audio avancé, A2DP,
n'est pas établie ;
la connexion A2DP est établie et en cours d'utilisation ; et
la connexion A2DP est établie mais n'est pas utilisée.

8. Procédé selon la revendication 6, dans lequel le rapport d'état de connexion du dispositif Bluetooth comprend l'un des éléments suivants :
le dispositif Bluetooth est dans un état de connexion HFP établie ;
le dispositif Bluetooth est dans un état de connexion HSP établie ; et
le dispositif Bluetooth est dans un état de connexion A2DP établie.

9. Procédé selon la revendication 6, comprenant en outre l'une des opérations suivantes :
l'établissement et le maintien d'une connexion HSP ou d'une connexion HFP entre le dispositif Bluetooth et l'un des deux terminaux ou plus ; et
l'établissement et le maintien d'une A2DP entre le dispositif Bluetooth et l'un des deux terminaux ou plus.

10. Procédé selon la revendication 6, dans lequel la demande de connexion qui est lancée par l'un des deux terminaux ou plus selon le rapport d'état de connexion et reçue par le dispositif Bluetooth tandis que la connexion BLE est maintenue, comprend l'un des éléments suivants :,
une demande, lancée par un des deux terminaux ou plus, d'établissement d'une connexion HFP avec le dispositif Bluetooth ;
une demande, lancée par un des deux terminaux ou plus, d'établissement d'une connexion HSP avec le dispositif Bluetooth ;
une demande, lancée par l'un des deux terminaux ou plus, de déconnexion de la connexion HFP avec le dispositif Bluetooth et de maintien de la connexion BLE uniquement ;
une demande, lancée par l'un des deux terminaux ou plus, de déconnexion de la connexion HSP avec le dispositif Bluetooth et de maintien de la connexion BLE uniquement ;
une demande, lancée par un des deux terminaux ou plus, d'établissement d'une connexion A2DP avec le dispositif Bluetooth ; et
une demande, lancée par l'un des deux terminaux ou plus, de déconnexion de la connexion A2DP avec le dispositif Bluetooth et de maintien de la connexion BLE uniquement.

11. Procédé selon la revendication 6, comprenant en outre l'une des opérations suivantes :
tandis que la connexion BLE est maintenue, le dispositif Bluetooth passe d'un état dans lequel le dispositif Bluetooth est dans une connexion HFP et exécute une fonction d'appel à un état dans lequel le dispositif Bluetooth n'est pas dans la connexion HFP ;
tandis que la connexion BLE est maintenue, le dispositif Bluetooth passe d'un état dans lequel le dispositif Bluetooth est dans une connexion HSP et exécute la fonction d'appel à un état dans lequel le dispositif Bluetooth n'est pas dans la connexion HSP ;
tandis que la connexion BLE est maintenue, le dispositif Bluetooth passe de l'état dans lequel le dispositif Bluetooth est dans la connexion HFP et exécute la fonction d'appel à un état dans lequel le dispositif Bluetooth est dans la connexion HFP mais n'exécute pas la fonction d'appel ;
tandis que la connexion BLE est maintenue, le dispositif Bluetooth passe de l'état dans lequel le dispositif Bluetooth est dans la connexion HSP et exécute la fonction d'appel à un état dans lequel le dispositif Bluetooth est dans la connexion HSP mais n'exécute pas la fonction d'appel ;
tandis que la connexion BLE est maintenue, le dispositif Bluetooth passe d'un état dans lequel le dispositif Bluetooth est dans une connexion A2DP et la connexion A2DP est en cours d'utilisation à un état dans lequel le dispositif Bluetooth n'est pas dans la connexion A2DP ; et
tandis que la connexion BLE est maintenue, le dispositif Bluetooth passe de l'état dans lequel le dispositif Bluetooth est dans la connexion A2DP et la connexion A2DP est en cours d'utilisation à un état dans lequel le dispositif Bluetooth est dans la connexion A2DP mais la connexion A2DP n'est pas utilisée.

12. Procédé selon la revendication 6, dans lequel l'établissement, en réponse à la demande de connexion, par le dispositif Bluetooth, de la connexion de communication Bluetooth non BLE avec l'un des deux terminaux comprend l'une des opérations suivantes :
l'établissement, par le dispositif Bluetooth, d'une connexion HSP avec l'un des deux terminaux ou plus ;
l'établissement, par le dispositif Bluetooth, d'une connexion HFP avec l'un des deux terminaux ou plus ; et
l'établissement, par le dispositif Bluetooth, d'une connexion A2DP avec l'un des deux terminaux ou plus.

13. Dispositif Bluetooth, comprenant un processeur qui est configuré pour exécuter le procédé selon l'une quelconque des revendications 6 à 12.
